# EUROPEAN PATENT APPLICATION

(11) **EP 4 462 346 A1**
(43) Date of publication of application: **13.11.2024**
(21) Application number: 22918878.4
(22) Date of filing: 26.12.2022
(51) Int. Cl.: G06Q 50/163, G06Q 50/16, G06Q 50/18

(54) **INHERITANCE ASSISTANCE DEVICE, INHERITANCE ASSITANCE PROGRAM, AND EVALUATION ASSISTANCE DEVICE**

(30) Priority: 06.01.2022 JP 2022000873
(71) Applicant: Broadleaf Co., Ltd., Tokyo 140-0002 (JP)
(72) Inventor: OYAMA Kenji, Tokyo 140-0002 (JP)
(74) Representative: Grünecker Patent- und Rechtsanwälte PartG mbB
(86) International application number: PCT/JP2022/047976
(87) International publication number: WO 2023/132294

(57) **Abstract**

This inheritance assistance device is configured using a computer, manages tangible assets and/or intangible assets, and provides assistance in the inheritance of those assets. The inheritance assistance device comprises: an asset information storage unit in which are stored asset identification information for identifying an asset to be managed, inheritance information including inheritor information for identifying a predetermined inheritor of the asset, and publication specification information for specifying publication or non-publication of at least the asset identification information; and a publication management unit that manages publication of the asset identification information and/or user information on the basis of the publication specification information stored in the asset information storage unit.

## Description

### TECHNICAL FIELD

The present disclosure relates to a succession support device that supports succession of a property, a succession support program, and an evaluation support device that supports evaluation of a property, and particularly, to a succession support device that supports succession of a property to be manageable, including whether to publicize a tangible property including a movable property and a real estate and an intangible property, a succession support program, and an evaluation support device.

### BACKGROUND ART

A property owned by a user or the like is registered in a registration book of the Legal Affairs Bureau if the property is a real estate, and is registered in the Land Transport Bureau or the like if the property is some movable property such as an automobile. However, the registration in the registration book or the Land Transport Bureau is not premised on active publication, and is not an effective means when it is desired to inform a third party that the property is owned, or the like. For example, although it may be desired to publicize a collector's item or the like collected as a hobby to a third party in order to show its own possession, there was an effective way only to publicize on a social network system (SNS) such as individual blogs in related art.

On the other hand, there are cases where users wish to centrally manage the tangible and intangible properties owned by the users, and there are also cases where even if the users plan to publicize the properties owned by the users to third parties at some point in the future, they currently do not want to publicize the properties to third parties. Patent Literature 1 (Japanese Unexamined Patent Publication No. 2001-167151) has been proposed as a technique related to such publication of property. A vehicle trading system disclosed in this document discloses that used car information can be publicized when a selling condition is satisfied.

In addition, Patent Literature 2 (US Patent Application Publication No. 2009/0012904, Specification) relates to a computer system and software for enabling Internet markets such as auctions and product list services, and discloses that in a case of transactions in which one or both parties are anonymous, an exchange executes a transaction without revealing the identity of one party to the other

Patent Literature 3 (Japanese Unexamined Patent Publication No. 2008-117216) relates to a mutual information exchange/transaction/information management system of deposited movable properties capable of enabling storage of clothes, accessories, bags, personal belongings, or various storable movable properties, evaluation of stored articles among members, including a user, and exchange of information, and allowing members and non-members to purchase the stored articles, and discloses that "a paid member a ranks movable properties A to C owned by the paid member, with A being Private, B being Open to members, and C being Full open. A Private means that only paid member a can browse items related to his or her movable properties, B Open to members means that a member b in addition to the paid member a can browse the items, and C Full open means that all visitors, including non-members, can browse items related to movable properties."

In addition, there is a commercial transaction as a scene in which a property owned by a user is publicized. For example, a vending system and a vending method disclosed in Patent Literature 4 (Japanese Unexamined Patent Publication No. 2002-117340) disclose a vending system that can easily receive a product at an outing destination and can particularly prevent leakage of personal information of users.

### CITATION LIST

### PATENT LITERATURE

Patent Literature 1: Japanese Unexamined Patent Publication No. 2001-167151
Patent Literature 2: US Patent Application Publication No. 2009/0012904 Specification
Patent Literature 3: Japanese Unexamined Patent Publication No. 2008-117216
Patent Literature 4: Japanese Unexamined Patent Publication No. 2002-117340

### SUMMARY OF INVENTION

### TECHNICAL PROBLEM

However, these techniques are intended for sale and purchase of products, and are capable of appropriately performing sale and purchase of products. Therefore, an object of the present disclosure is to provide a property management device that can manage publication or non-publication of a property without requiring transaction such as transfer such as sale and purchase or renting out.

In addition, when a purpose is for sale and purchase as in the related art, it is necessary to publicize information on an object to be sold and purchased. However, there is a case where when simply managing the property without a purpose for sale and purchase, the publication to third parties is not desired. Therefore, another object of the present disclosure is to provide a property management device that enables central management by receiving registration of properties managed by a user, while also allowing the user to arbitrarily select publication or non-publication of the properties. In particular, still another object is to provide a property management device that, when publicizing at least one of property identification information for identifying a property that is a management target and user information for identifying a manager who manages the property, enables a publication content and a publication condition to be set and allows a predetermined publication content to be publicized based on the publication condition.

Although there is a property that is desired to be acquired or rented, there are many cases where an administrator including an owner, a user or the like of the property is not known, and in such cases, it is not possible to start a transaction. Although the property owned by the owner does not necessarily desire a transaction such as transfer or renting out, the transaction such as transfer or renting out may be performed depending on conditions. Therefore, another object of the present disclosure is to provide a property management device capable of publicizing a property managed by a user regardless of whether there is an intention of a transaction such as transfer or renting out, and capable of performing the transaction such as transfer or renting out depending on a condition presented by a requester of the transaction such as transfer or renting out.

When a specific property is desired to be transferred or rented out, the owner or the user of the property can be known by confirming registration in a real estate registration book or the Land Transport Bureau depending on the target property. However, when such a registration book does not exist, for example, when the property is a wristwatch, a collector's item or the like, the owner cannot be known. Accordingly, another object of the present disclosure is to provide a property management device capable of knowing an administrator including an owner, a user and the like of a property.

Further, when the user performs a transaction such as transfer or renting out of the property managed by the user and when a requester who requests the transaction such as transfer or renting out of the property performs an application, a value of the property is often desired to be known. However, in the trading system disclosed in Patent Literature 1 and the like, a sales system subjectively determines a value, and there is no material for objective determination. In particular, for a property in which a calculation criterion of a market price is not clarified, evaluation of a value of the property is important for establishment of a transaction. Accordingly, another object of the present disclosure is to provide a property management device capable of supporting evaluation of a value of a property managed by a user.

Additionally, yet another object is to provide a property management device that, when managing a property, allows management, including publication or non-publication, an whether a transaction is possible, or a change (including of transfer and inheritance) of an owner, a manager, or a user, with respect to not only a property owned or managed by a user but also a property owned, managed, or used by a third party.

Still yet another object is to provide a property management device that, when a transaction or negotiation is conducted on a property being managed, can support an objective value evaluation of the property and ensure the safety of the transaction.

In addition, still yet another object of the present disclosure is to provide a succession support device and a succession support system that can make information that is a cause of succession, such as a will for inheritance or other general succession of a property being managed, and can objectively guarantee authenticity of documents or information proving an event of the cause of succession, such as a will.

### SOLUTION TO PROBLEM

### «Publication management device of property»

In order to solve the above problems, the present disclosure provides a property management device that can register a property owned or managed by a user without requiring a transaction such as transfer or renting out, and allows the user to arbitrarily select publication of the property and to set a publication content and a publication condition.

That is, the present disclosure provides a property management device that is configured using a computer, manages at least one of a tangible property and an intangible property, and includes a property information storage unit configured to store at least one of property identification information for identifying a property that is a management target and user information for identifying a user who manages the property, and publication identification information for identifying publication or non-publication of each of the property identification information and the user information; and a publication processing unit configured to perform publication processing of the property identification information and/or the user information based on publication condition information included in the publication identification information, wherein the publication identification information includes the publication condition information including a publication content and a publication condition for the publication for each of the property identification information and/or the user information to be publicized.

The property that is a management target may be a property owned or managed by a third party, in addition to a property owned or managed by the user. Additionally, the publication processing unit may be configured to perform publication processing with a preset publication content according to the preset publication condition. The publication condition may be an uncertain condition based on an external factor such as an exchange rate or a relationship with another transaction, in addition to a fixed condition such as a publication timing. When the publication condition set in the publication condition information is satisfied, the publication processing unit may perform publication, in addition to notifying the user of the satisfaction. Additionally, the publication content may include a publication timing, a publication target, a publication region, and the like, in addition to eclectic information on information to be publicized.

The property management device according to the present disclosure may include a history storing unit configured to store a transaction history for the property of a management target stored in the property information storage unit. The transaction history stored by the history storing unit can be stored regardless of whether a transaction has been established, and a content of history information stored, a storing period, and the like may be set different when a transaction is established and when a transaction is not established.

Additionally, the property management device according to the present disclosure may also be configured as a property management device that can manage a property owned or used by a third party on behalf of the third party.

That is, the property identification information identifies a property owned or used by a third party and includes change condition information that prescribes a change condition for an owner or manager of the property owned or used by the third party. The property management device includes an owner/user change means for changing the owner or user of the property upon satisfaction of the change condition prescribed in the change condition information, stores, as the user information, trustee information for identifying a trustee who has been entrusted with management or disposition of the property by a third party, and when an owner or user is changed regarding the property entrusted to the trustee, associates the changed owner or user with the trustee information.

Additionally, the present disclosure provides a property management program that runs on a computer and manages at least one of a tangible property and an intangible property.

That is, there is provided a property management program including a property information storing step of storing at least one of property identification information for identifying a property that is a management target and user information for identifying a user who manages the property, and publication identification information for identifying publication or non-publication of each of the property identification information and the user information, a publication processing step of performing publication processing of the property identification information and/or the user information based on publication condition information included in the publication identification information, and an owner/manager change step of changing an owner or manager of the property upon satisfaction of a change condition prescribed in change condition information, the publication identification information including publication condition information, which includes a publication content and a publication condition for publication, for each of the property identification information and/or the user information to be publicized, the property identification information identifying a property owned or managed by a third party and including the change condition information that prescribes the change condition for an owner or manager of the property owned or managed by the third party, wherein the property management program holds, as the user information, trustee information for identifying a trustee who has been entrusted with management or disposition of the property by a third party, and when an owner or user is changed regarding the property entrusted to the trustee, associates the changed owner or user with the trustee information.

In addition, the property management device according to the present disclosure is a property management device configured using a computer and configured to manage at least one of a tangible property and an intangible property managed by a user, and may include a property information storage unit configured to store property identification information for identifying a property managed by a user, user information for identifying a user who manages the property, and publication identification information for identifying publication or non-publication of at least one of the property identification information and the user information; and a publication management unit configured to manage publication of at least one of the property identification information and the user information based on the publication identification information stored in the property information storage unit.

The publication identification information enables selection of not publicizing any one of the property identification information and the user information. That is, the publication identification information may include information for identifying to publicize the property identification information and/or the user information, as well as information for identifying not to publicize the property identification information and/or the user information. When selecting not to publicize, a radio box for selecting publication of the property identification information and/or the user information may be provided, or a radio box for selecting non-publication thereof may be provided.

The publication identification information may include publication condition information for identifying at least one of a condition for publication by the publication management unit and a range for publication by the publication management unit.

### <Transaction support device and transaction support system of property>

In order to solve at least one of the above problems, the present disclosure provides a transaction support device of property (or property management device) configured to perform a transaction using the property management device.

That is, there is provided a property transaction support device configured using the property management device according to the present disclosure, wherein the property transaction support device includes a transaction application information storage unit configured to store transaction application information including application information for acquisition or renting of a management target property stored as the property identification information. Additionally, the present disclosure provides a property transaction support device (or property management device) configured using the property management device according to the present disclosure, wherein the property transaction support device further includes a transaction request information storage unit configured to store transaction request information for identifying whether the user has an intention to transfer or rent out the property (i.e., a property transaction intention), and wherein the transaction request information enables selection of not transferring or renting out the property and is included as the information for managing publication by the publication management unit.

In the transaction support device of property, the transaction request information may include rank information for identifying a degree of the intention of the user to transfer or rent out the property in a stepwise manner. Information stored by the transaction request information storage unit may further include transaction element information for identifying an element that affects formation of the intention to transfer or rent out the property. The transaction element information may be included as information for managing publication by the publication management unit. The transaction support device of property may further include a transaction application information storage unit configured to store transaction application information including application information for acquisition or renting with respect to the property identification information publicized by the publication management unit.

In order to solve at least one of the above problems, the present disclosure provides a transaction support system of property (or property management system) formed using the transaction support device of property (or property management device).

That is, there is provided a transaction support system of property (or property management system) includes: the transaction support device of property (or property management device) according to the present disclosure; a user terminal connected to the property management device via a network and operated by the user; and a requester terminal connected to the property management device via the network and operated by a requester who requests to acquire or rent the property. The publication management unit in the transaction support device of property (or property management device) includes a transaction execution unit configured to publicize at least one of the property identification information and the user information based on the publication identification information stored in the property information storage unit and publicize transaction application information acquired from the requester terminal to the user terminal.

In addition, the transaction support device and transaction support system of property according to the present disclosure may be configured to support a transaction of transferring or renting out a property not owned or managed by a user, i.e., a property owned or managed by a third party and a property requested to be owned or managed, in addition to supporting a transaction of transferring or renting out a property owned or managed by the user. Therefore, the property information storage unit can store property identification information on a third party who requests to own or manage a property, and the property identification information stored by the property information storage unit may be configured so that the property owned or managed by the user and the property owned or managed by a third party who requests to own a property can be distinguished from each other. In this case, separately from the property identification information for identifying a property owned or managed by the user, request property identification information for identifying a property owned or managed by a third party who requests to own a property may be configured. An application for transfer or renting out for the request property identification information may be stored as transaction request information.

Additionally, the property information storage unit may include requester information for identifying a requester who requests to own or manage another person's property, in addition to user information for identifying a user who owns or manages a property that is a management target. In this case, the user information consists of information for identifying the user, and may be stored with an identifier that distinguishes whether the user owns or manages a user's property or requests to own or manage a property owned or managed by a third party.

Therefore, the present disclosure provides a property transaction support device (or property management device) configured using the property management device according to the present disclosure, wherein the property identification information identifies a property requested to be owned or managed and stores requester information for identifying a requester who requests to own or manage another person's property.

The identification of the property requested to be owned or managed (hereinafter, referred to as "request property") may be separately managed as request property identification information, in addition to being managed as the property identification information. The request property may be a property that a third party requests to own or manage, in addition to a property that a user requests to own or manage. That is, the request property may be a property that the third party requests to own or manage, depending on a request from the third party. Additionally, the request property may be registered without identifying an owner or manager thereof, in addition to being registered while identifying the owner or manager. In particular, for a request property registered without identifying the owner or manager, sales information on the request property may be searched for on the Internet, and the like, and information on transfer or renting out of the request property may be extracted and provided to the requester. In particular, it is also desirable to use artificial intelligence (AI) to search for the request property and to extract information on transfer or renting out of the request property based on a feature amount of the request property. Additionally, by extracting the information on the transfer or renting out of the request property on a regular basis, the start of the transfer or renting out of the request property can also be monitored.

By receiving transaction request information from a requester who requests to own or manage a property as described above, a transaction can be requested even for a property not stored as property identification information in the property information storage unit. Therefore, for example, when the transaction request information requesting a transaction is registered for a property that the owner or manager of the property uses or wears, the property is registered in the property information storage unit, and the transaction thereof can be supported. As a result, a property that is not specially recognized as a property by the owner or manager of the property but is recognized as having a property value by another person (transaction requester) is subjected to processing of registering as a property by receiving transaction request information. After performing the registration processing, the transaction requester may be registered as a first trader with priority information added so as to support a property transaction. When a transaction such as transfer or renting out is established, the history information may be stored. On the other hand, when a transaction such as transfer or renting out is not established, the transaction history information may be stored only for a certain period of time, and after a certain period of time, the history information may be automatically deleted.

In addition, the transaction support device and transaction support system of property according to the present disclosure provide a property transaction support device and a property transaction support system that support, based on a subjective requirement consisting of an owner or manager of a property, a transaction of a property owned or managed by the owner or manager. That is, there is provided a property transaction support device (or property management device) configured using the property management device according to the present disclosure, wherein the property transaction support device (or property management device) identifies a user who owns or manages a property based on the user information, and registers a property owned or managed by the user as property identification information. In particular, an application for transfer or renting out of a property owned or managed by a specific person may be stored as transaction request information, and a requester who requests to own or manage the property owned or managed by the specific person may be stored as requester information.

The property transaction support device supports a transaction based on a user who owns or manages a property, and publicizes property identification information when the property owned or managed by the user is registered as the property identification information. In addition to the publication on the web, the publication may be limited to a specific person, or may be limited to only a person with whom the user information is associated. Therefore, a user who requests to own or manage a property of a specific user can acquire application information for transfer or renting out or publication information regarding the property owned or managed by the specific user by registering the specific user identification information.

In addition, for a requester who has registered transaction request information consisting of the application for transfer or renting out of the specific property or a property owned or managed by a specific person is given priority information to conduct preferentially a negotiation for transfer or renting out of the property. The priority information may be an authority to negotiate first with the owner or manager of the property, or may be information that grants an advantage with respect to the terms of the transaction. Additionally, when multiple pieces of transaction request information of the same type are registered, the priority information may be given in order of registration of the transaction request information. Note that the priority information may include an order of publication of the property identification information. That is, the property identification information may be publicized in order in which the priority information is given.

The property subjected to transaction in the property transaction support device and property transaction support system according to the present disclosure is not limited to a property owned or managed by a user. That is, the property may be a property owned or managed by a third party, and furthermore, may be a property of a third party managed by a user. In particular, when conducting a transaction of a property owned or managed by a third party, the user information may include a person who has received a consent to conduct the transaction from a person who owns or manages the property. For example, when a certain condition is satisfied for a property whose objectivity is publicly guaranteed, such as a trust property, the trustee of the trust property may register the property as a property of a person who has newly trusted the property, and conduct transaction and management such as transfer and renting out on behalf of the trustor. Accordingly, the property management device can also accept a change in user information on the property.

Additionally, registration of the property that is a transaction target may be performed without requiring the consent of the owner or manager of the property. In this case, the property that is a transaction target is a property owned or managed by a third party, and the user who has registered the property may acquire the property of the third party on the basis of the conclusion of a transaction of the property. Additionally, a user who has registered the property may set a cancellation condition based on acquisition or use of a property of a third party when trading the property. According to this configuration, the safety of the transaction can be secured even for sale and purchase of another person's goods.

Therefore, the present disclosure provides a property transaction support device (or property management device) configured using the property management device according to the present disclosure, wherein the property identification information identifies a property owned or managed by a third party, the property identification information includes change condition information that prescribes a change condition for an owner or manager of a property owned or managed by a third party, and the property transaction support device (or property management device) includes an owner/manager change means for changing an owner or manager of the property upon satisfaction of the change condition prescribed in the change condition information.

In the property transaction support device (or property management device), information for identifying a trustee who has been entrusted with management or disposition of a property by a third party is stored as the user information, and when there is an owner or manager for the property entrusted to the trustee, the property may be managed or disposed as a property of the changed owner or manager. In this case, the user information is to identify a person who manages or disposes the property, and the property owner information for identifying an owner or user of the property may be stored separately from the user information. The property user information may be configured such that it can be changed arbitrarily or under a condition that a certain requirement is satisfied.

### <Evaluation support device and evaluation support system of property>

In order to solve at least one of the above problems, the present disclosure provides an evaluation support device of property (or property management device) configured to evaluate a value of a property using the property management device.

That is, there is provided an evaluation support device of property (or a property management device) configured using the property management device according to the present disclosure. The evaluation support device of property further includes a property evaluation unit configured to calculate a market value of the property identified by at least one of the property identification information and the user information. The property evaluation unit may evaluate a value of the property from a current or past transaction record of a property the same as or similar to the property using the property identification information stored in the property information storage unit, or may provide history (a transaction history, an administrator history of the property, or the like) information on the property.

The evaluation support device of property (or property management device) may further include an appraisement information acquisition unit configured to acquire appraisement information output from an external appraisement device connected via the network on the value of the property evaluated by the property evaluation unit.

In order to solve at least one of the above problems, the present disclosure provides an evaluation support system of property (or property management system) formed using the evaluation support device of property (or property management device).

That is, there is provided an evaluation support system of property (or property management system) includes: the transaction support device of property (or property management device) according to the present disclosure; a user terminal connected to the property management device via a network and operated by the user; and a requester terminal connected to the property management device via the network and operated by a requester who requests to acquire or rent the property. The evaluation support system of property (or property management system) generates evaluation information by evaluating the value of the property by the property evaluation unit when the property identification information is stored in the property information storage unit of the evaluation support device of property (or property management device) or a value evaluation request of the property is acquired from the user terminal or the requester terminal, and publicizes the evaluation information to at least one of the user terminal and the requester terminal.

### «Inheritance support device and inheritance support system of property»

In addition, in order to solve at least one of the above problems, the present disclosure provides a succession support device of property configured to support inheritance or bequest of a property using the property management device.

That is, there is provided a succession support device that is configured using a computer, manages at least one of a tangible property and an intangible property, and supports succession thereof, wherein the succession support device includes a property information storage unit configured to store property identification information for identifying a property that is a management target, succession information including successor information for identifying a successor predetermined for the property, and publication identification information for identifying publication or non-publication of at least the property identification information; and a publication management unit configured to manage publication of at least one of the property identification information and the user information based on the publication identification information stored by the property information storage unit.

In the succession support device, the property information storage unit may further include user information for identifying an owner, a manager, or a user of the property that is a management target, and may be further configured to store publication identification information for identifying publication or non-publication of each of the property identification information and the user information. In addition, the succession support device may include a publication processing unit configured to perform publication processing of the property identification information and/or user information based on publication condition information included in the publication identification information, wherein the publication identification information includes publication condition information including a publication content and a publication condition for the publication, for each of the property identification information and/or user information to be publicized.

In addition, the succession information may also include succession event information for identifying an event that is a cause of the succession. When the succession event occurs, the property identification information, the successor information, and, if necessary, the user information may be transmitted to a will making device that makes a will. When the information is received, the will information making device may make will information according to the succession information, add authentication to the will information as necessary, and then transmit the same to the succession support device.

Additionally, the succession information may include, in addition to the cause of succession, a condition for performing succession as succession condition information. Such succession condition information may be information that prescribes conditions for additional succession after the cause occurs, separately from the cause of succession such as general succession or specific succession. In addition, the succession support device preferably includes a property value evaluation unit for evaluating a value of a property that is a management target.

### ADVANTAGEOUS EFFECTS OF INVENTION

Since the property management device according to the present disclosure includes the publication processing unit that performs publication processing of the property identification information and/or user information based on the publication condition information included in the publication identification information, the user can arbitrarily select and manage whether to publicize the property identification information and/or user information stored in the property information storage unit. In particular, the publication identification information allows the user to select not to publicize any of the property identification information and the user information, thereby making it possible to conceal information about the property. Since the publication identification information includes, for each of the property identification information and/or user information to be publicized, the publication condition information including the publication content and the publication condition for the publication, when publicizing at least one of the property identification information and the user information, the publication content and the publication condition can be set in advance, and a predetermined content can be publicized based on the publication condition. Accordingly, according to the present disclosure, it is possible to provide the property management device that can centrally manage a tangible property and an intangible property managed by a user, and furthermore, allows the user to arbitrarily select publication or non-publication of the property.

In the case where the property that is a management target is also managed with respect to succession such as inheritance, the succession information including the successor information for identifying a successor predetermined for the management property is stored, so it is possible to make and manage a document or information indicating the cause of succession, such as a will based on an event of succession while managing publication or non-publication of the property identification information.

In particular, even when the property identification information and/or the user information is publicized by the publication management unit, the publication is not necessarily intended to be transferred or lent out, and thus the property management device can be configured to be able to perform publication depending on management of the user. As a result, a third party can know an administrator including an owner, the user and the like of the property. That is, it is possible to provide a property management device in which a requester who requests to acquire or rent the property can know a transaction partner.

The publication identification information includes publication condition information for identifying at least one of a condition for publication by the publication management unit and a range for publication by the publication management unit, so that it is possible to optionally control a publication timing and a range of publication of information on the property owned or managed by the user, and it is possible to provide a property management device in which the information on the property can be publicized as necessary and within a necessary range.

Further, the property management device according to the present disclosure includes the transaction request information storage unit that stores the transaction request information for identifying whether the user has the intention to transfer or rent out the property, and the transaction request information enables selection of not transferring or renting out the property and may be included as the information for managing publication by the publication management unit.

When the property management device publicizes the property identification information and/or the user information stored in the property information storage unit, the property management device can clarify the intention of the user as to whether the user requests to transfer or rent out the property, thereby providing an opportunity for a transaction of the property and supporting the transaction. In particular, by publicizing the rank information indicating the degree of the request for transfer or renting out by the user in the stepwise manner, the requester who requests acquire or rent in contact with the property identification information and/or the user information can predict a possibility of the transaction. In the transaction request information, since it is not necessary to identify a price or a condition for the transfer or renting out, the property managed by the user can be set as a target of the transaction (that is, an inventory) even if the property is in use, and as a result, opportunities for the transaction can be increased.

Further, when the information stored by the transaction request information storage unit includes the transaction element information that identifies the element that affects the formation of the intention to transfer or rent out the property managed by the user and the information managed by the publication management unit includes the transaction element information, the requester who requests to acquire or rent the property can determine whether to apply the transaction based on the transaction element information.

By providing the transaction application information storage unit that stores the transaction application information including the application information for acquisition or renting with respect to the property identification information publicized by the publication management unit, it is possible to notify the user that there is an application for acquisition or renting. In this case, when the transaction application information includes a transaction condition including a price, a timing or the like, it is possible to notify the user of the transaction condition. Thereby, the user can publicize the property managed by the user regardless of whether the user intends to transfer or rent out the property, and the property management device can perform the transaction such as transfer or renting out depending on the condition presented by the requester of the transaction. As a result, when it is unclear whether the property managed by the user can be a transaction target such as transfer or renting out, and even when the property is currently used, the property can be easily publicized as the transaction target (inventory).

When the property management device according to the present disclosure includes the property evaluation unit that evaluates the value of the property based on the current or past transaction record of the property the same as or similar to the property using the property identification information stored in the property information storage unit and provides the history (the transaction history, the administrator history of the property, or the like) information on the property, it is possible to perform objective value determination even for the property having no calculation criterion of value evaluation in a market. Therefore, it is possible to provide a property management device capable of supporting evaluation of a value of a property managed by a user.

### BRIEF DESCRIPTION OF DRAWINGS

[Fig. 1] Fig. 1 is a block diagram showing a property management device according to a first embodiment.
[Fig. 2] Fig. 2 is a list of items that can be included in property identification information.
[Fig. 3] Fig. 3 is a file (or database) configuration diagram showing items that can be included in user information.
[Fig. 4] Fig. 4 is a file (or database) configuration diagram showing items that can be included in publication identification information.
[Fig. 5] Fig. 5 is a sequence diagram showing processing executed by a property management system (publication management system of property).
[Fig. 6A] Fig. 6A is a registration screen of the property identification information and/or the user information on a user terminal.
[Fig. 6B] Fig. 6B is a registration screen of the property identification information and/or the user information on the user terminal.
[Fig. 7] Fig. 7 is a block diagram showing a property management device according to a second embodiment.
[Fig. 8] Fig. 8 is an input screen of transaction request information to be displayed on the user terminal.
[Fig. 9] Fig. 9 is a sequence diagram showing processing executed by a property management system (transaction support system of property).
[Fig. 10A] Fig. 10A is a display screen of the property identification information and the user information to be displayed on a requester terminal.
[Fig. 10B] Fig. 10B is an input screen of transaction application information to be displayed on the requester terminal.
[Fig. 11A] Fig. 11A is a block diagram showing a property management device according to a third embodiment, and is a block diagram of an evaluation support device configured using a publication management device of property.
[Fig. 11B] Fig. 11B is a block diagram showing the property management device according to the third embodiment, and is a block diagram of an evaluation support device configured using a transaction support device of property.
[Fig. 12] Fig. 12 is an output screen of an evaluation result in a property evaluation unit.
[Fig. 13] Fig. 13 is a sequence diagram of an evaluation support system of property using a publication management system of property.
[Fig. 14] Fig. 14 is a network configuration view of a property management system (evaluation support system of property).
[Fig. 15] Fig. 15 is a sequence diagram showing processing executed by a property management system (transaction support system of property).
[Fig. 16] Fig. 16 is a display screen of transaction application information including an evaluation result and a request condition.
[Fig. 17] Fig. 17 is a sequence diagram showing processing by a property management system according to another embodiment.
[Fig. 18] Fig. 18 is a sequence diagram showing processing of a transaction support system according to another embodiment.
[Fig. 19] Fig. 19 is a sequence diagram of a property management system (inheritance support system) configured using a property management device (inheritance support device) according to another embodiment.
[Fig. 20] Fig. 20 is a file (or database) configuration diagram showing items of succession information.
[Fig. 21] Fig. 21 is a configuration diagram showing items of a successor file (or database).

### DESCRIPTION OF EMBODIMENTS

Hereinafter, a property management device 10 according to the present embodiment will be specifically described with reference to the drawings.

In particular, the property management device 10 according to the present embodiment is embodied as "a publication management device 11 and a publication management system 110 of property" that manage whether to publicize or not to publicize information (property identification information 85 and/or user information) on property (object) held in a property information storage unit 21, "a transaction support device 12 and a transaction support system 120 of property" that support transaction of the property stored in the property information storage unit 21, and "an evaluation support device 13 and an evaluation support system 130 of property" that support evaluation of a value of the property held in the property information storage unit 21.

### <Publication management device 11 and publication management system 110 of property>

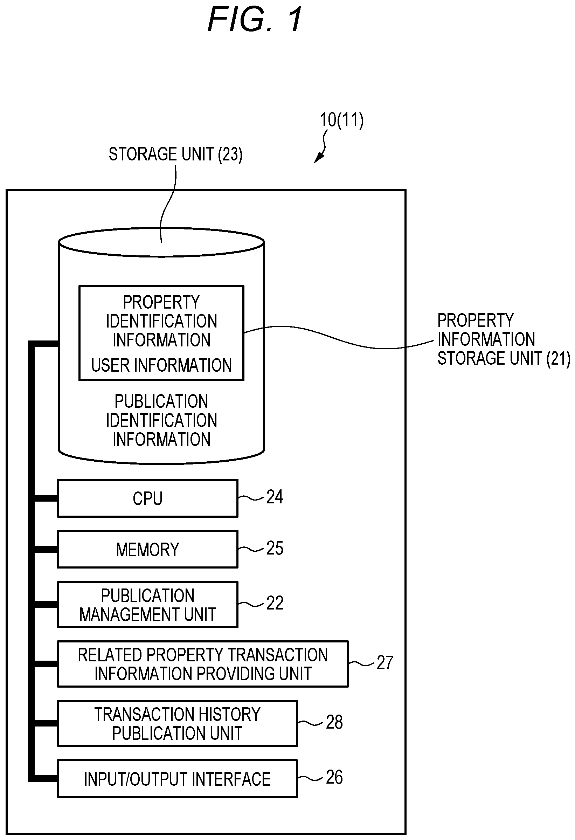

Fig. 1 is a block diagram showing the property management device 10 according to a first embodiment, and particularly shows the publication management device 11 of property that manages publication or non-publication of property of a user.

The property management device 10 shown in Fig. 1 is configured using a computer, and includes the property information storage unit 21 that stores property identification information 85, user information and publication identification information, and a publication management unit 22 that manages publication or non-publication of the property identification information 85 and/or the user information.

The computer includes configurations necessary to execute information processing. Specifically, the computer includes a storage unit 23 that stores programs and data, a central processing unit (CPU) 24 that calculates and executes information processing, a memory 25 that reads and writes data when the CPU 24 executes the information processing, and an input/output interface 26 that inputs an executive command to the CPU 24 and outputs information from the CPU 24. The storage unit 23 is, for example, a HDD (Hard Disk Drive), SSD (Solid State Drive), or semiconductor memory.

The publication management unit 22 may be configured using the CPU 24, the memory 25, the input/output interface 26 and the like in the computer

When a property is a tangible property (tangible object), the property managed by the user may be real estate information such as a land or a building, or may be a tree attached to the land. In addition, other objects are not excluded as long as the objects can be sold and purchased, including, as the tangible property, beverages including wine, sake, brandy and the like, precious metal products including bullions, coins, rings, necklaces, watches and the like, collector's items such as toys, stamps, works of art, crafts and the like, vehicles including airplanes and trains in addition to automobiles and motorcycles, sports goods such as golf goods, storage items such as bags and cases, and apparel products such as clothes and shoes. Of course, the objects may be daily necessities.

In a case of intangible property (intangible object), the intangible property may be an intellectual property right such as a patent right, a utility model right, a design right, a trademark right or a copyright, may be an intellectual property such as a business secret, or may be a program source code. That is, a management target of the property management device 10 according to the present disclosure may not be particularly limited as long as an ownership or a usage right can be determined or there is an asset value.

Management of the property by the user includes a state where the user owns the property while maintaining an appropriate state, as well as a state where the user owns the property by having an ownership and a state where a third party different from the user simply uses the property by having the ownership. That is, the property managed by the user includes a property owned by the user and a property used by the user in addition to a property managed by the user

The property identification information 85 is information for identifying the property managed by the property management device 10 or information for evaluating a value of the property, and contents (or items) thereof may be optionally selected depending on a type of a target property.

The property identification information 85 may be any information that can identify the target property or that can evaluate the value of the property, and it is particularly desirable that the property identification information 85 includes information that affects the value of the property.

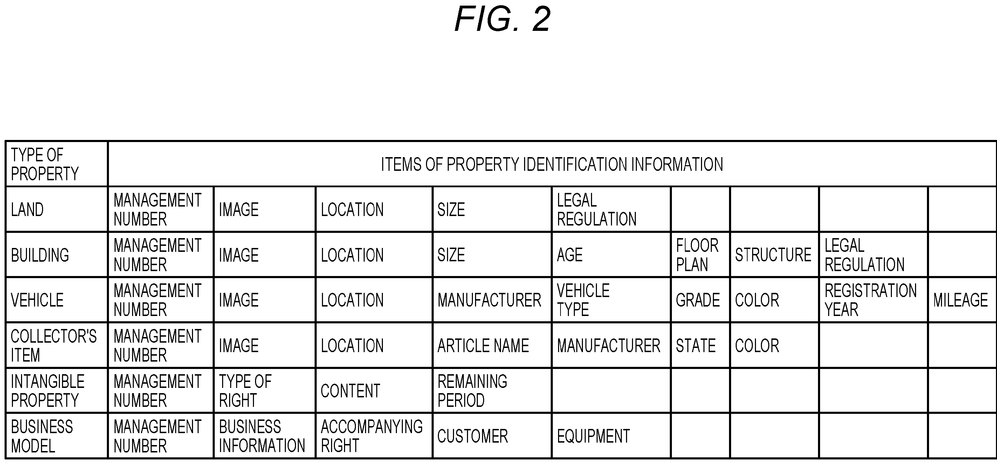

Fig. 2 is a list showing items that can be included in the property identification information 85, and these items can be used as items when forming a file (or a database). As shown in Fig. 2, items (that is, information constituting target property identification information 85) may be changed depending on a type of a property. Specifically, when the target property is a land, the property identification information 85 may include "image", "location", "size", "legal regulation" or the like. When the target property is a building, the property identification information 85 may include "image", "location", "size", "age", "floor plan", "structure", "legal regulation" or the like. When the target property is a vehicle, the property identification information 85 may include "image", "location", "manufacturer (brand)", "vehicle type", "grade", "color", "registration year", "mileage" or the like. When the target property is an article such as a clock or a bag, the property identification information 85 may include "image", "location", "article name", "manufacturer", "state", "color" or the like. When the target property is a collector's item such as a stamp, a work of art, or a craft, the property identification information 85 may include "image", "location", "article name", "manufacturer", "state", "color" or the like. When the target property is an industrial property right such as a patent right, a utility model right, a design right or a trademark right, or an intangible property right such as a copyright, a fosterer right or a circuit arrangement right, the property identification information 85 may include "type of right", "content", "remaining period (or date of occurrence of right)" or the like. When the target property is a business model including a business secret, the property identification information 85 may include "business content", "accompanying right", "customer", "equipment" or the like. For each property registered for each type of property, "property type identification information" for managing the property may be assigned.

The user information may identify a user who manages the property. The user may be identified directly or indirectly as long as the user who manages the property can be identified.

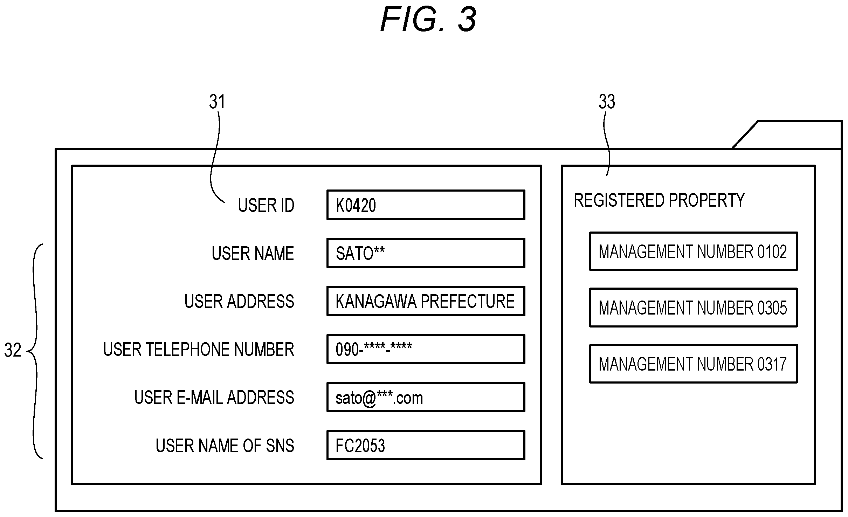

Fig. 3 is a file (or database) configuration diagram showing items that can be included in the user information. In particular, in the present embodiment, in addition to "user ID" 31 assigned to each user, user contact information 32 such as "user name", "user address", "user telephone number", "user e-mail address" and "user name of SNS" can be included as items for identifying the user and use as contact information.

Further, a nickname can be included as a display name when the user information is publicized. The user information includes an item of "registered property" 33 as information on the property registered by the user. Thereby, the user and the registered property can link. However, a link between the user and the registered property may be managed by providing the user ID 31 in publication identification information to be described later, or may be managed by separately linking the user ID 31 and a property type identification number 40 with a master file or the like.

The publication identification information may include information for identifying publication or non-publication of at least one of the property identification information 85 and the user information. The publication identification information enables selection of not publicizing any one of the property identification information 85 and the user information, whereby it is possible to realize property management that is not premised on publication.

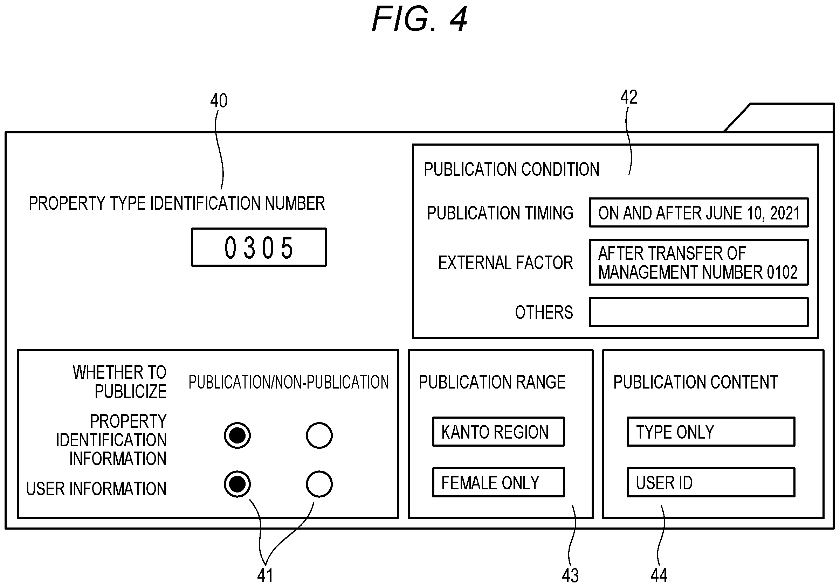

Fig. 4 is a file (or database) configuration diagram showing items that can be included in the publication identification information. In particular, in the present embodiment, a radio box 41 for selecting publication or non-publication of the property identification information 85 and/or the user information may be provided. As the publication identification information, only the radio box 41 for selecting publication or only the radio box 41 for selecting non-publication may be provided.

The publication identification information may include publication condition information 42 as information for identifying a condition and/or a range under which the property identification information 85 and/or the user information is publicized by the publication management unit 22. The publication condition information may be a confirmed condition such as a timing of publication, or may be a publication condition based on an external factor such as when a foreign exchange rate reaches a predetermined amount or when a transaction of another property is completed. When the condition set in the publication condition information is satisfied, a user terminal 51 may be notified of this to prompt the publication or the property management device 10 may execute publication processing.

An item of "publication range" 43 may be provided as information for identifying a range within which information on the property (that is, the property identification information 85 and/or the user information) is publicized. The item of the "publication range"43 may be a regional range within which the property identification information 85 and/or the user information is publicized, and may be configured to be able to select age, gender, income and the like. The publication condition information may include an item of "publication content"44 that designates publication content information for identifying the content of the property identification information 85 and/or the user information to be publicized.

The publication condition information 42 shown in Fig. 4 may be items including a publication condition for publicizing the property identification information 85 and/or the user information (publication date and time, external factor), the publication range 43 or identifying a target person who publicizes the property identification information 85 and/or the user information (publication area, publication target person), and the publication content 44 for identifying a content to be publicized when the property identification information 85 and/or the user information is to be publicized (identification information included in an item of the property identification information 85 or the user information).

By registering the property identification information 85 and/or the user information in the property information storage unit 21 as described above, the property management device 10 can manage the property identified by the property identification information 85 and/or the user information. In particular, when there is a property in which the property identification information 85 and/or the user information is registered in the property information storage unit 21, the property management device 10 preferably includes a related property transaction information providing unit 27 that provides transaction information regarding a transaction such as transfer or renting out of another similar or related property.

The related property transaction information providing unit 27 extracts transaction information such as presence or absence of a transaction such as transfer or renting out of a property related to the property identified by the property identification information 85 and/or the user information registered in the property information storage unit 21, a condition of the transaction, and a timing of the transaction, from transaction application information to be described later or information existing on a network. Thereafter, the related property transaction information providing unit 27 can notify the user of this, the user having registered the property identification information 85 and/or the user information. The information existing on the network can be extracted by artificial intelligence. At this time, it is desirable that the user sets a degree and a range of extraction by the artificial intelligence with respect to similarity and relevance of the property.

The transaction information provided by the related property transaction information providing unit 27 may be used as information for evaluating the value of the property in a property evaluation unit 30 to be described later.

Therefore, the property management device 10 according to the embodiment may be configured to acquire transaction information on the property (related property) having similarity and relevance and information on a value of the property evaluated by the property evaluation unit 30 to be described later regardless of whether the property identification information 85 and/or the user information is to be publicized or not to be publicized.

In the publication management device 11 and the publication management system 110, by providing the related property transaction information providing unit 27, it is possible to acquire information on a transaction record of the similar or related property and the value of the property even for the property that is not currently desired to be traded, and the user can use the information for reference of value determination of the property. The user can identify transaction request information for identifying an intention of transaction such as transfer or renting out of the property according to a result of the value determination of the property.

The property management device 10 may include a transaction history publication unit 28 that publicizes a history of a transaction when the transaction for the property identified by the property identification information 85 and/or the user information registered in the property information storage unit 21 is established regardless of whether the property identification information 85 and/or the user information is to be publicized or not to be publicized.

The history of the transaction publicized by the transaction history publication unit 28 may include information for reference to other transactions such as information on a property serving as a transaction target (transaction property information), a date of the transaction, and an amount of the transaction, and may be set such that personal information capable of identifying a transaction party such as a user or a requester is not publicized.

The property management device 10 (publication management device 11 of property) configured as described above can construct a property management system 100 (publication management system 110 of property) using the user terminal 51 operated by the user and the requester terminal 52 operated by a requester who requests to acquire or rent the property, which are further connected to the network.

In the property management system 100 (publication management system 110 of property), the property identification information 85 and/or the user information input or transmitted from the user terminal 51 or collected via the network may be stored in the property information storage unit 21.

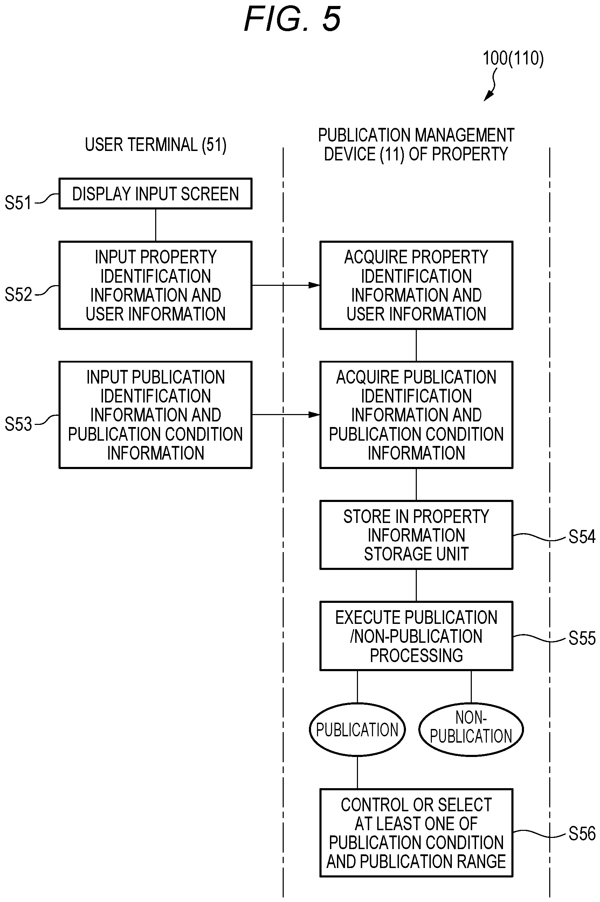

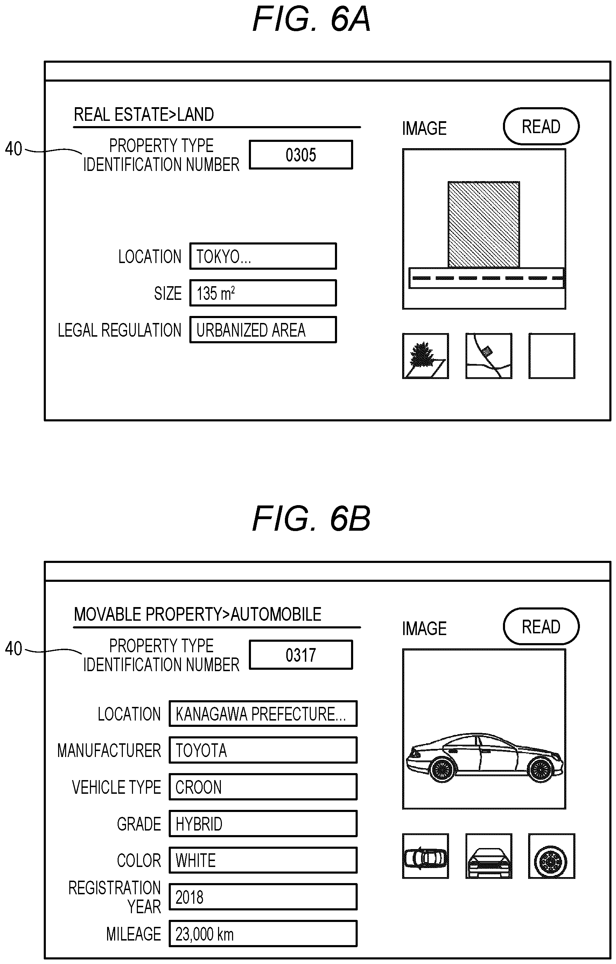

Fig. 5 is a sequence diagram showing processing of the property management system 100 (publication management system 110 of property) constructed using the publication management device 11 of property, and Figs. 6A and 6B show screens on which the property identification information 85 and/or the user information can be registered from the user terminal 51.

The property management system 100 (publication management system 110 of property) collects the property identification information 85 and/or the user information from information transmitted from the user terminal 51 first or publicized on the network, and registers the property identification information 85 and/or the user information in the property information storage unit 21.

As shown in Fig. 5, when the property identification information 85 and/or the user information is registered from the user terminal 51, the user terminal 51 is connected to the publication management device 11 via the network to display an input screen shown in Figs. 6A and 6B (S51). The user can register the user information in advance, and in this case, an input of the user information on the input screen can be omitted.

The user inputs information that can identify the property to be registered in the property management device 10 (publication management device 11 of property) using the input screen (S52). An item of the information to be input can be changed according to a type of the target property as shown in Fig. 2.

Therefore, the input screen is classified and displayed according to the type of the property (more specifically, the "property type identification number 40"). When the requester identifies the type of the property, the classified input item can be displayed in a stepwise manner on the input screen.

An example of the input screen at this time is shown in Figs. 6A and 6B. Fig. 6A shows an input screen when "real estate > land" is selected as a target property, and Fig. 6B shows an input screen when "movable property > automobile" is selected.

Subsequently, the property management device 10 (publication management device 11 of property) acquires the property identification information 85 and/or the user information. When the property identification information 85 and/or the user information is collected from information publicized on the network, a URL on the network or information on a person who posts the information may be used as the user information.

The property identification information 85 may be information itself posted on the network, or may be new information subjected to processing such as extraction or addition of necessary information from the information.

When or after acquiring the property identification information 85 and/or the user information, the user can input publication identification information and/or publication condition information using the user terminal 51. Thereby, the property management device 10 (publication management device 11 of property) acquires the publication identification information for identifying whether the information is to be publicized or not to be publicized (S53), and stores the publication identification information in the property information storage unit 21 or the like (S54).

Subsequently, the property management device 10 (publication management device 11 of property) executes processing of setting the acquired property identification information 85 and/or the acquired user information to either publication or non-publication based on the publication identification information (S55), and stores each piece of information in an publication or non-publication state.

In particular, when the publication identification information includes the publication condition information, at least one of a condition for publicizing the information and a range for publicizing the information is controlled or selected according to the publication identification information (S56).

In the property management system 100 (publication management system 110 of property) configured as described above, the property identification information 85 is stored in association with the user information, and the user can centrally manage the registered property. The user can appropriately manage the property by optionally setting presence or absence of publication of the identified property among the registered property, a publication timing, a publication condition and the like.

Therefore, the property management device 10 centrally manages the property managed by the user, and can optionally select publication or non-publication of the property. Since registration can be performed without requiring a transaction such as transfer or renting out in trading or the like, the user can use the property management device 10 in a desired form such as management of the property.

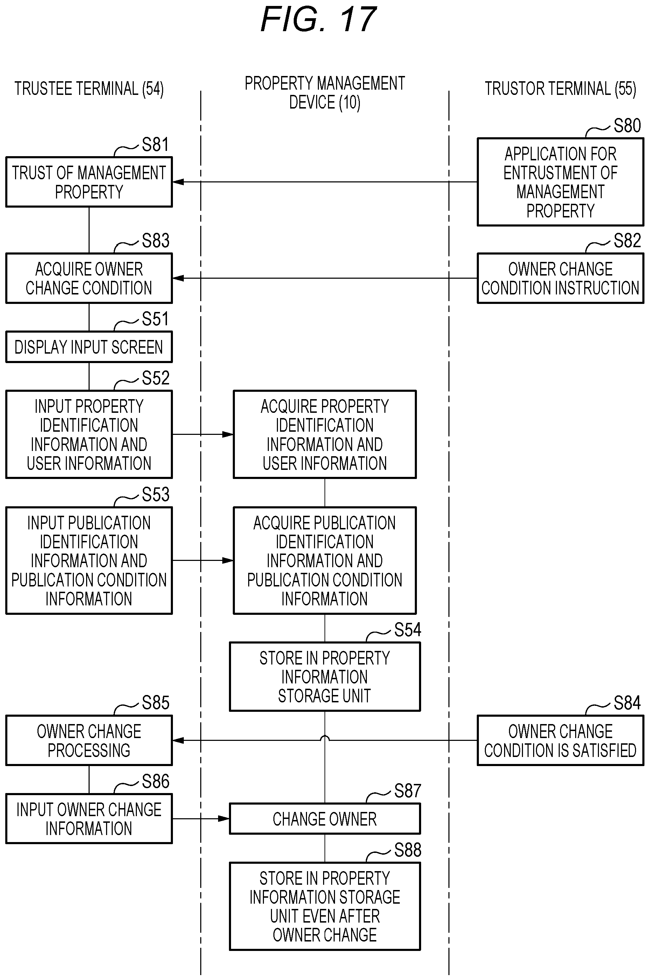

Fig. 17 is a sequence diagram showing processing by a property management system according to another embodiment. The transaction support system shown in this figure may be configured using the property management device 10. In particular, the transaction support system according to the present embodiment is configured using the property management device 10 configured such that the trustee who has been entrusted with management or disposition of a property can manage the property on behalf of the trustor. That is, in the present embodiment, the property identification information and the user information registered from the trustee terminal 54 do not related to a property owned or used by the trustee, but a property owned or used by the trustor who is a third party, and the trustee is a person who manages, by the property management device 10, a property (hereinafter, referred to as "management property") for which management has been offered by the trustor, based on entrustment from the trustor.

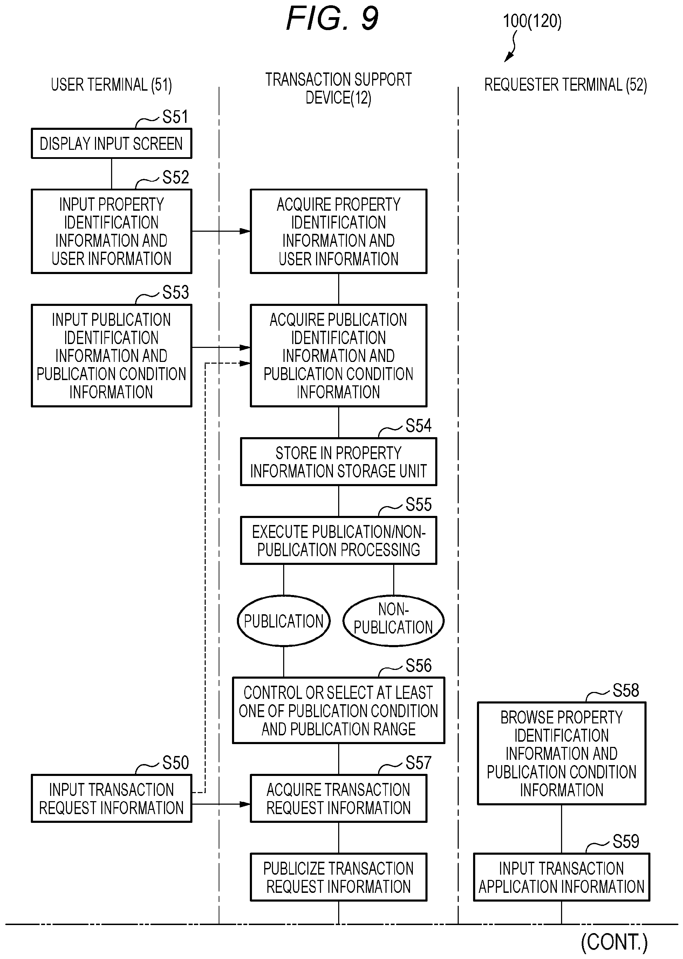

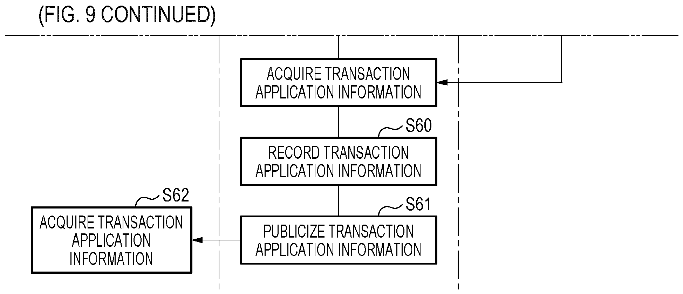

For this reason, when performing the above processing, it is necessary to process an entrustment application for the management property on the trustor terminal 55 (S80), and upon receiving the entrustment application for the management property, the trustee terminal is entrusted with management or disposition for the management property (S81). Additionally, the trustee terminal 54 receives an input (S82) of owner change condition instruction information for identifying a change condition of an owner or user for the management property, the input being made on the trustor terminal 55, acquires the owner change condition instruction information (S83), and stores the same. Thereafter, by operating the trustee terminal 84, an input screen is displayed on the property management device (S51), and property identification information and user information are input for the management property (S52), which are then transmitted to the property management device 10. In the property management device 10, the property identification information and the user information are acquired and registered. Additionally, in the trustee terminal 84, the publication identification information and the publication condition information are input for the registered property (S53), which are then transmitted to the property management device 10 and registered. The property identification information, user information, publication identification information, and publication condition information are stored in the property information storage unit of the property management device 10 (S54), so that the property can be managed. Although not shown in Fig. 17, publication/non-publication processing is performed for the registered property by processing similar to that shown in Fig. 9.

In the property management device 10, while managing the publication and non-publication of the management property, the property identification information, user information, publication identification information, and publication condition information are stored in the property information storage unit, and the management property is managed until the owner change condition is satisfied. Then, the trustee terminal 84 starts (S85) owner change processing when owner change condition satisfaction information identifying that the owner change condition is satisfied is acquired from the trustor terminal 85 through an input (S84) of the corresponding information, and changes the owner or user of the management property to a trustor who is a new owner or user. In the owner change processing, the owner change information for changing the management property to a trustor who is a new owner or user is input from the trustee terminal 84 (S86), and the property management device 10 acquires the information to change the owner of the management property (S87). Then, the management property is stored and managed in the property information storage unit, as a property of the new trustor changed from the original trustor,

Note that in Fig. 17, the trustee terminal 84 receives the satisfaction information on the owner change condition from the trustor terminal 85, but the satisfaction information may also be transmitted and received via the property management device 10. That is, the property management device 10 may acquire the satisfaction information on the owner change condition from the trustor terminal 85, store the information, and then transmit the information to the trustee terminal 84. In addition, the trustee terminal 84 may start the owner change processing on its own without acquisition of the satisfaction information on the owner change condition as a start condition. Additionally, the property management device 10 may acquire court records and other information and perform the owner change processing without requiring an instruction from the trustee terminal 84.

### <Transaction support device 12 and transaction support system 120 of property>

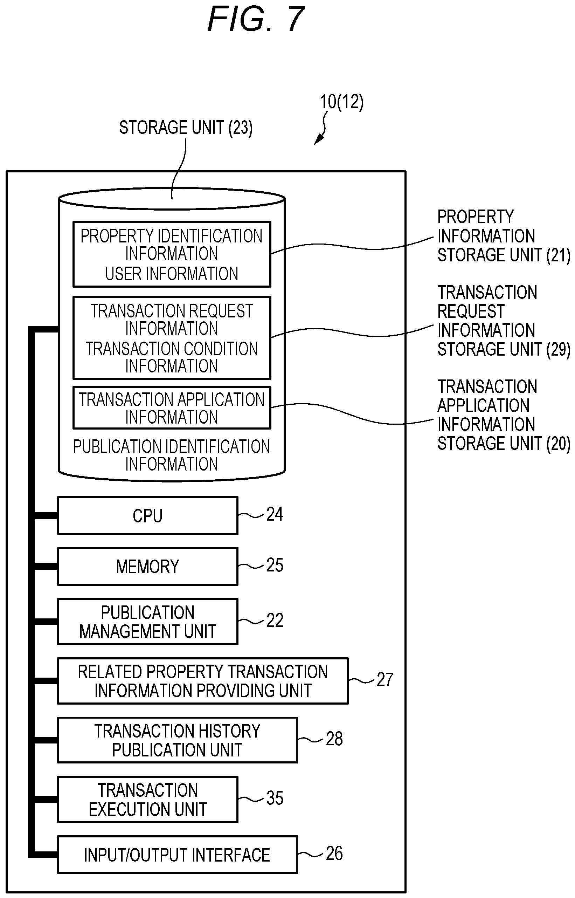

Fig. 7 is a block diagram showing the property management device 10 according to a second embodiment, and particularly shows the transaction support device 12 of property that supports a transaction of a property of a user. The property management device 10 (transaction support device 12 of property) shown in Fig. 7 is configured using a computer, and further includes a transaction request information storage unit 29 that stores transaction request information 81 for identifying whether the user has an intention to transfer or rent out the property to the property management device 10 (publication management device 11 of property) shown in the first embodiment.

The transaction request information 81 is information that enables selection of not performing a transaction such as transfer or renting out of the property, and can be set at any timing. Since the transaction request information 81 can be set, the user can be prompted to register information on the property regardless of presence or absence of a transaction request. The transaction request information 81 may include transaction condition information 82 as information for managing publication by the publication management unit 22.

That is, the property management device 10 (transaction support device 12 of property) according to the present embodiment is configured to manage publication or non-publication of the information stored in the property information storage unit 21 and to select whether to perform a transaction such as transfer or renting out. Therefore, the user can register the property that does not request the transaction with ease.

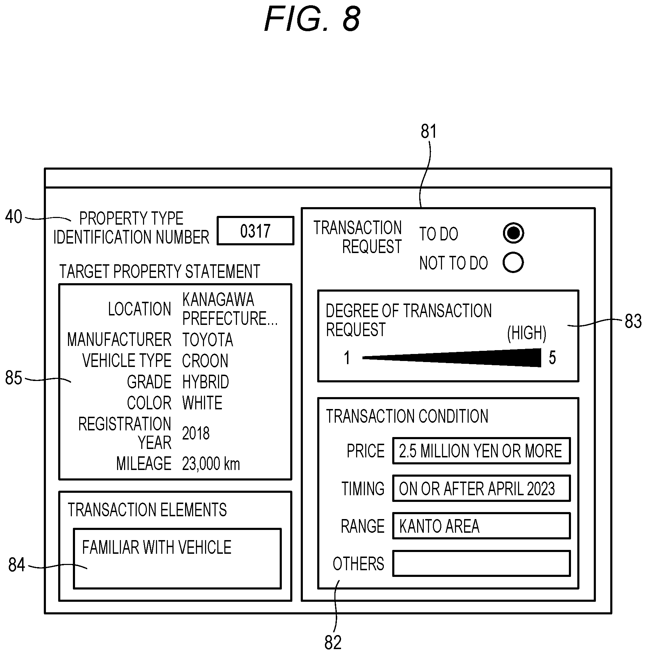

An input screen shown in Fig. 8 is provided with an input field for inputting the transaction request information 81 in addition to information that can be input on the input screen shown in Fig. 6B. The information input to the input field of the transaction request information 81 can be recorded in the transaction request information storage unit 29 in a file format or a database format.

The transaction request information 81 includes information that the user requests to perform a transaction such as transfer or renting out of the property managed by the property management device 10 (transaction support device 12 of property), and further includes information that allows the user to select not to perform the transaction such as transfer or renting out of the property. The transaction request information 81 may be information that enables selection without being related to publication identification information for identifying whether to publicize the property identification information 85 and/or the user information.

For example, the transaction request information 81 may include information that does not publicize the property identification information 85 or the user information, but requests to perform a transaction such as transfer or renting out. In particular, the transaction request information 81 is information for making that a transaction such as transfer or renting out of the property is not performed as one of options, and thus the property management device 10 can perform only publication of the property without requesting the transaction such as transfer or renting out.

The transaction request information 81 is optional, and may include the transaction condition information 82 for identifying a transaction condition such as a price and a timing for a transaction such as transfer or renting out, and a range to be a target of the transaction such as transfer or renting out (a range or a region of a target person to be a transaction partner, or a range of a property to be a target of the transaction).

However, since it is important for the property management device 10 (transaction support device 12 of property) according to the present embodiment to publicize a person (user) who manages the property, it is not necessary to identify the transaction condition such as the price for performing the transaction such as transfer or renting out.

The transaction condition can also be determined after waiting for a presentation from a requester of the transaction who requests to acquire or rent. That is, the property management device 10 (transaction support device 12 of property) according to the present embodiment may be any device as long as the device can identify an owner, a user or an administrator of the property and publicize an intention of transaction such as transfer or renting out by the user.

Thereby, the transaction support device 12 provides the user with management of the property and an opportunity for the transaction of the property. Further, the transaction support device 12 can also provide an opportunity for the transaction of the property to the requester who requests to acquire or rent the property.

In the property management device 10 (transaction support device 12 of property) according to the present embodiment, the transaction request information 81 may include rank information 83 for identifying a degree of an intention of the user to transfer or rent out the property in a stepwise manner.

The rank information 83 may include information for identifying the degree of the intention of the user to perform a transaction such as transfer or renting out. The rank information 83 may be formed in a slider format as shown in Fig. 8, and may include information for identifying a transaction intention of transfer or renting out, such as "transfer (or renting out) is desired", "transfer (or renting out) may be performed", "transfer (or renting out) may be performed depending on conditions", or "do not perform transfer (or renting out)", in a stepwise manner using numerals or symbols identifying a plurality of stages. The requester can determine a start of the transaction according to the rank information, can change a display order based on the rank information, and can further use the rank information as an extraction item.

Information stored by the transaction request information storage unit 29 may further include transaction element information 84 for identifying an element that affects formation of the intention to transfer or rent out the property. Information for managing publication by the publication management unit 22 may include the transaction element information 84.

Although the transaction element information 84 is not a transaction condition, the transaction element information 84 may include information for identifying an element for which a transaction such as transfer or renting out is not desired. The transaction element information 84 may be effective information for determining that the property owned by the user may be transferred or rented out, such as a location, a timing, an age, and a gender of a requester who performs the transaction such as transfer or renting out, in addition to a price for the transaction such as transfer or renting out.

In an example shown in Fig. 8, "details about the vehicle" is set as the transaction element information 84. By publicizing the transaction element information 84, the requester who satisfies the element can easily apply for transfer or renting out of the property, and can promote the transaction.

The property management device 10 according to the present embodiment may be configured to receive an application of a transaction such as acquisition or renting from a requester who has browsed the publicized property identification information 85 or the publicized user information. That is, the property management device 10 may further include a transaction application information storage unit 20 that stores transaction application information including application information for a transaction such as acquisition or renting of the property identified by the property identification information 85 publicized by the publication management unit 22.

By providing the transaction application information storage unit 20, the property management device 10 can support a transaction negotiation, can store information on a history of the transaction of the managed property, and can use the information for evaluation processing in the property evaluation unit 30 to be described later.

The transaction application information includes information for identifying an intention of applying a transaction such as transfer or renting out of the property with respect to the publication of the property identification information 85 and/or the user information publicized by the publication management unit 22. Further, the transaction application information may include a transaction condition for performing the transaction such as transfer or renting out, and information of the requester who requests the transaction such as transfer or renting out.

Fig. 9 is a sequence diagram showing processing of the property management system 100 (transaction support system 120 of property) established using the property management device 10 (transaction support device 12 of property), and the input screen on the user terminal 51 is the same as the processing shown in Fig. 8.

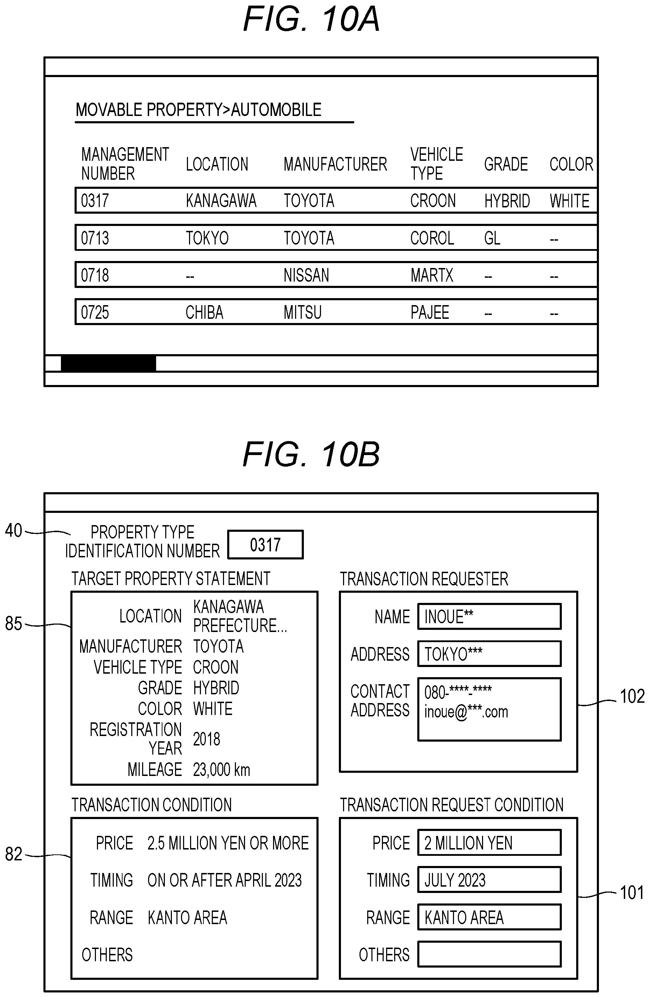

In addition, Fig. 10A shows a display screen of the property identification information 85 and user information displayed on the requester terminal 52 connected to the property management device 10 (transaction support device 12 of property) via a network, and Fig. 10B shows a transaction application information input screen displayed on the requester terminal 52 connected to the property management device 10 (transaction support device 12 of property) via a network.

The sequence diagram of the property management system 100 (transaction support system 120 of property) shown in Fig. 9 is configured by adding the requester terminal 52 to the sequence diagram of the property management system 100 (publication management system 110 of property) shown in Fig. 5. The requester terminal 52 is a terminal operated by a requester who requests a transaction such as acquisition or renting of the property for which the property identification information 85 and/or the user information is publicized.

Prior to a transaction such as transfer or renting out of the property in the property management system 100 (transaction support system 120 of property), the user registers the property to be managed. As shown in Fig. 5, the property is registered by the user using the user terminal 51 or by the transaction support device 12 collecting and registering information publicized on the network.

The property identification information 85 and/or the user information stored in the property information storage unit 21 can be accessed from an external terminal such as the requester terminal 52 when publication is selected in the publication identification information.

However, the property identification information 85 and/or the user information may be partially publicized by limiting a range of the publication such as publicizing a specific person (region) or a specific period. Processing from a display of the input screen (S51) to control or selection of at least one of the condition for publicizing the information and the range for publicizing the information according to the publication condition information (S56) is the same as that in Fig. 5, and thus is denoted by the same reference numerals, and detailed description thereof will be omitted.

Since the property management device 10 according to the present embodiment particularly supports the transaction of the property, the property management device 10 further acquires the transaction request information 81 for identifying whether the user intends to perform the transaction such as transfer or renting out of the property (S57), and stores the acquired transaction request information 81 in the transaction request information storage unit 29.

The transaction request information 81 can be acquired based on whether the transaction request information 81 is posted as a transaction target on the network in addition to input and selection from the user terminal 51 (S50). The transaction request information 81 may include information indicating that the transaction such as transfer or renting out of the property is not performed at the time of registration of the property identification information 85 and/or the user information, and may be set to perform the transaction at any timing by the user or according to a content of the transaction request information 81 to be described later. Then, the transaction request information 81 stored in the transaction request information storage unit 29 may be publicized by the publication management unit 22 (S58).

In particular, the transaction request information 81 may include at least one of the transaction condition information 82, the rank information 83 and the transaction element information 84 in a case where the transaction such as transfer or renting out is performed, and the publication management unit 22 may publicize the information.

The property identification information 85 and/or the user information publicized by the property management device 10 (transaction support device 12 of property) can be browsed from the requester terminal 52 operated by a person who requests a transaction such as acquisition or renting (S58).

Fig. 10A shows an example of the display screen of the property identification information 85 and/or the user information on the requester terminal 52. A requester operates the requester terminal 52 to search for presence or absence of a property being searched for. The property to be searched at this time is not necessarily set such that the user requests a transaction such as transfer or renting out, and a price of the property does not need to be specified.

It is possible to provide an opportunity for a transaction to the requester only by providing information of a transaction partner or the like with respect to the desired property, and it is possible to sufficiently perform a transaction support. In particular, Fig. 10A shows the display screen in a case where a property serving as a transaction target is an automobile as a movable property, and "--" is displayed for an item that the user does not request to publicize.

In this manner, the requester searches and browses the property identification information 85 and/or the user information publicized by the property management device 10 (transaction support device 12 of property) using the requester terminal 52 (S58). When the requester searches for a property that the requester requests to perform a transaction, the requester can determine whether to perform a transaction negotiation based on condition information, the rank information 83, the transaction element information 84 and the like for the transaction such as transfer or renting out publicized for the property.

When the transaction negotiation is performed, a requester operates the requester terminal 52 to display a transaction negotiation screen shown in Fig. 10B and input transaction application information that is application information of a transaction such as acquisition or renting of the property (S59).

In the transaction negotiation screen shown in Fig. 10B, the transaction application information including transaction request condition information 101 related to a transaction, such as a requested amount of the transaction such as acquisition or renting out, a requested timing of acquisition or renting out, and a requested period of renting out, and transaction requester information 102 capable of identifying the requester himself or herself, is input. The transaction requester information 102 includes, for example, information such as an address, a name, a telephone number, an e-mail address or an SNS account name.

The property management device 10 (transaction support device 12 of property) records the transaction application information input by the above operation in the transaction application information storage unit 20 (S60). Then, the property management device 10 (transaction support device 12 of property) extracts all or any selected item of the transaction application information recorded in the transaction application information storage unit 20, and publicizes the extracted item to the user terminal 51 at any timing by a transaction execution unit 35 (S61).

When the user terminal 51 acquires the publicized transaction application information from the property management device 10 (transaction support device 12 of property) (S62), the user can determine whether to perform a transaction based on the acquired transaction application information. The transaction at this time can be performed by a related-art transaction method.

By executing the above processing, a third party such as a requester of the transaction can know the user who manages the property.

The property management device 10 (transaction support device 12 of property) can provide an opportunity to perform a transaction negotiation for the property managed by the user. In particular, when the transaction request information 81 includes at least one of the condition information, the rank information 83 and the transaction element information 84 for the transaction such as transfer or renting out of the property, and the information is publicized, the third party such as the requester of the transaction can objectively know a possibility of the transaction of the property.

The property management device 10 (transaction support device 12 of property) can publicize the property managed by the user regardless of whether the user intends to perform a transaction such as transfer or renting out of the property, and can promote the transaction such as transfer or renting out depending on a condition presented by the requester of the transaction such as transfer and renting out.

Therefore, the property management device 10 (transaction support device 12 of property) and the property management system 100 (transaction support system 120 of property) according to the present embodiment can set all the property managed by the user as the transaction target (that is, an inventory in the transaction), and can support the transaction in a new form in which the property managed by the user is set as the transaction target (that is, the inventory) regardless of the intention of the transaction, which has not existed in the related art.

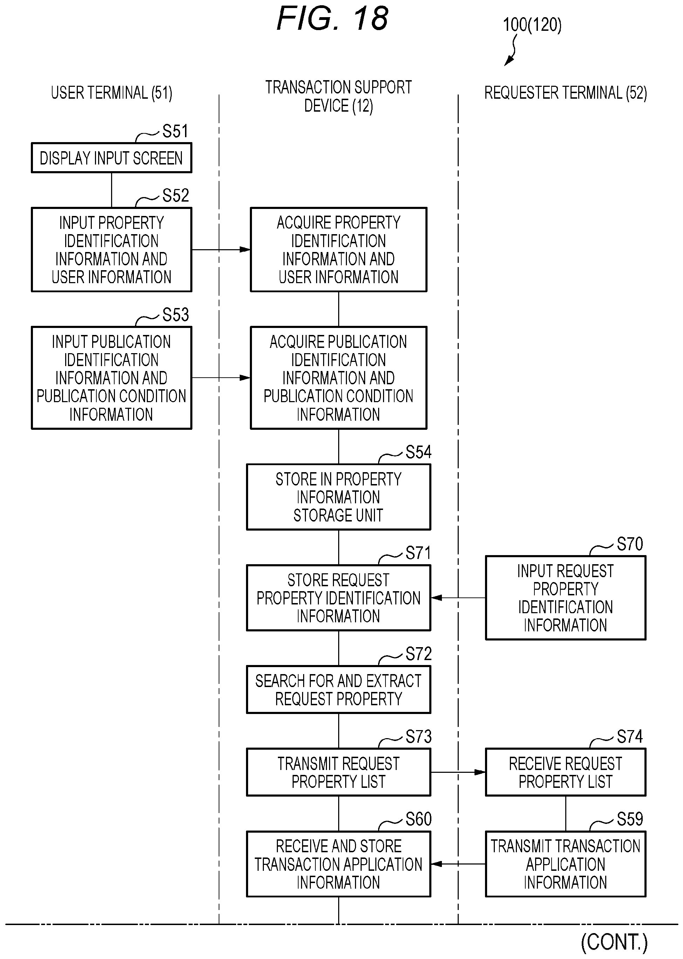

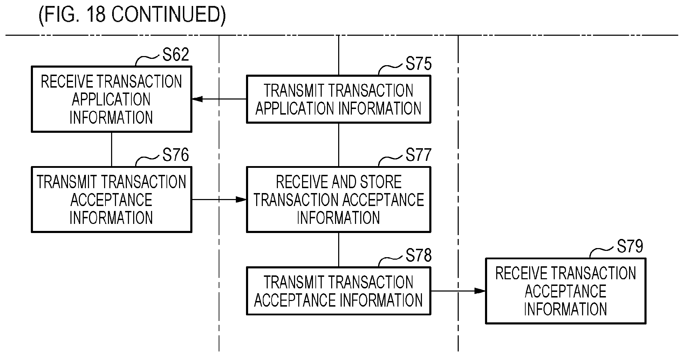

Fig. 18 is a sequence diagram showing processing of a transaction support system according to another embodiment. The transaction support system shown in this figure may be configured using the property management device 10 (transaction support device 12 of property). In particular, the transaction support system 120 (property management system 100) according to the present embodiment is configured using the property management device 10 (transaction support device 12 of property) configured such that a person who requests to own, manage, or use a property owned, managed, or used by a third party can apply a transaction for the property.

In the transaction support system 120, the input screen of the transaction support device is first displayed on the user terminal (S51), and by an operation on the user terminal 51, the property identification information and the user information regarding a property owned, managed, or used by the user are input (S52), which are then transmitted to the property management device 10. In the property management device 10, the property identification information and the user information are acquired and registered. Additionally, in the user terminal 51, the publication identification information and the publication condition information are input for the registered property (S53), which are then transmitted to the property management device 10 and registered. The property identification information, user information, publication identification information, and publication condition information are stored in the property information storage unit of the property management device 10 (S54), so that the property can be managed. Although not shown in Fig. 18, the publication/non-publication processing is performed for the registered property by processing similar to that shown in Fig. 9. Additionally, registration of the property identification information, user information, publication identification information, and publication condition information may be performed after the request property identification information input from the requester terminal, which will be described in detail below, is stored.

In the transaction support system 120 according to the present embodiment, especially when request property identification information is input by an operation on the requester terminal 52 (S70), the property management device 10 acquires and stores the same as request property identification information (S71). In addition to being stored in the property information storage unit, such request property identification information may also be stored in a storage unit provided separately from the property information storage unit. In addition to identifying a property, for which a transaction is requested, depending on a type, a form and the like of the property, the request property identification information may also identify the property for which a transaction is requested by identifying an owner, manager, or user of the property. Additionally, the request property identification information is not necessarily limited to properties for which property identification information is stored in the property management device 10, and may be properties for which property identification information is not yet stored. In this case, when the property identified by the request property identification information is registered in the property management device 10, priority processing for preferentially conducting transaction negotiation may be executed for the user (requester terminal) who has registered the request property identification information. The priority processing may include processing that allows only the user (requester terminal) to conduct transaction negotiation exclusively for a certain period of time or until a certain requirement is satisfied.

Then, after acquiring and storing the request property identification information by an operation on the requester terminal, the property management device 10 searches for whether a property (hereinafter, referred to as "request property") identified by the request property identification information is stored in the property information storage unit, and extracts the property (S72). At this time, properties that are set as private can also be included as the search target. However, properties that are set private may be managed so that the property information thereof can be publicized to the requester terminal only when the user's consent is obtained.

The request property search and extraction processing is performed, and a list of request properties is made, and is transmitted to the requester terminal 52 (S73). The request properties extracted to the list may be publication and non-publication information stored in the property information storage unit. In particular, the property information that is kept private may be managed such that the user's consent for the property is required. Additionally, the request properties extracted to the list are not limited to the properties stored in the property information storage unit, and information posted on the Internet may also be used. For this reason, the property management device preferably includes a request property search unit that searches for information on the Internet with respect to the request property, and the request property search unit may be established using artificial intelligence (AI) that extracts the request property information feature amount and performs an information search.

The request property list made by the property management device 10 is transmitted to the requester terminal 52 that has registered the request property identification information corresponding thereto. When the requester terminal 52 receives the request property list (S74), the requester who has acquired the list selects one or more of the properties listed in the list and transmits transaction application information for identifying that the selected properties are requested for transaction (S59). Upon receiving the transaction application information, the property management device 10 stores the transaction application information (S60) and transmits the same to the user terminal 51 operated by the user who owns, manages, or uses the property (S75). In the user terminal 51, upon receiving the transaction application information (S62), the user examines whether a transaction for the property is possible, and transmits transaction acceptance information when the user accepts the transaction application (S76). Upon receiving the transaction acceptance information, the property management device 10 stores the same (S77). Then, the property management device transmits the transaction acceptance information to the requester terminal (S78), and the requester terminal can receive the same (S79). On the other hand, if the user cannot accept the transaction application for the received transaction application information, the user may transmit transaction withdrawal information regarding withdrawal of the transaction, instead of the transaction acceptance information. Note that, in Fig. 18, since the exchange of transaction application information between the requester terminal 51 and the user terminal 52 is performed via the property management device 10, the property management device 10 may store the transaction history (including notarization history). However, the transmission and reception of the transaction application information and the like may also be performed directly between the requester terminal and the user terminal without passing through the property management device 10.

### <Evaluation support device 13 and evaluation support system 130 of property>

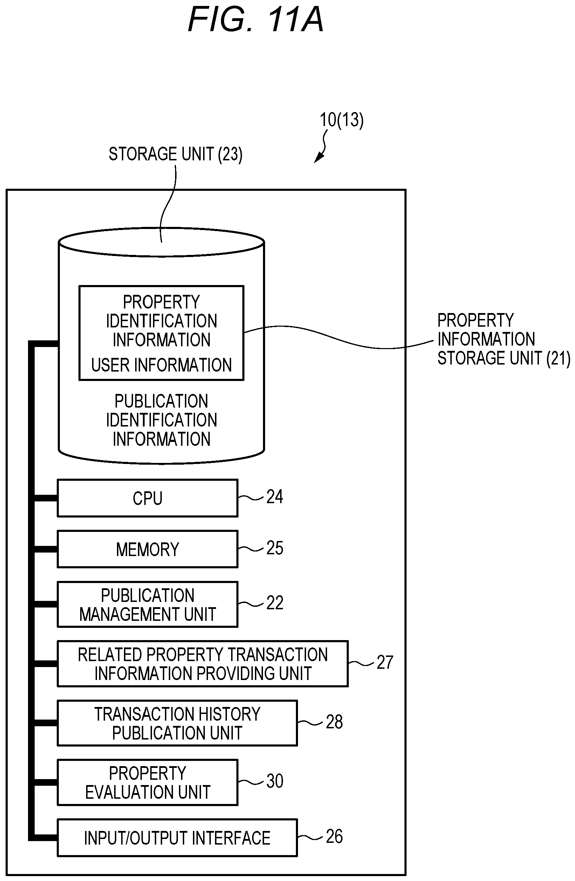

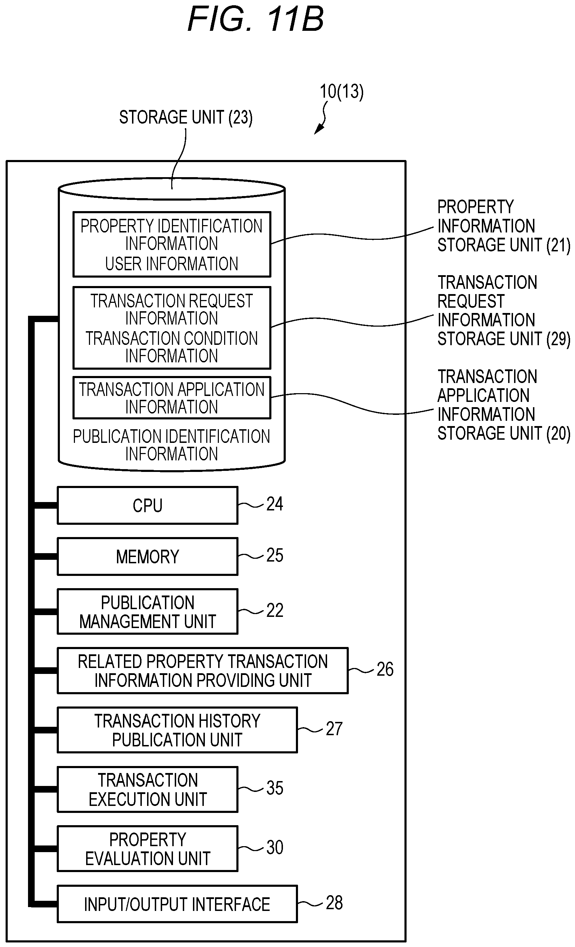

Figs. 11A and 11B are block diagrams showing the property management device 10 according to a third embodiment, in which Fig. 11A shows the block diagram of the evaluation support device 13 formed using the publication management device 11 of property, and Fig. 11B shows the block diagram of the evaluation support device 13 formed using the transaction support device 12 of property.

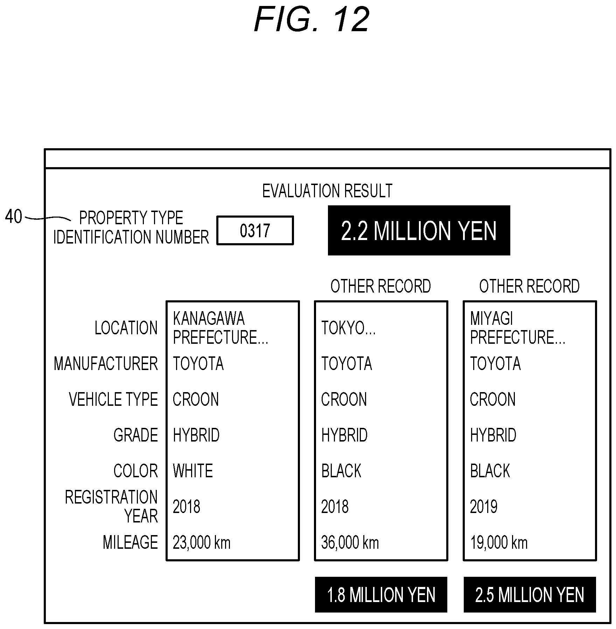

Fig. 12 shows an output screen on which an evaluation result of the property evaluation unit 30 is output.

The property management device 10 according to the present embodiment is configured using a computer, and is, in particular, the evaluation support device 13 of property that supports evaluation of a property of a user

The property management device 10 (evaluation support device 13 of property) includes the property evaluation unit 30 in addition to a configuration of the property management device 10 described in the first embodiment or the second embodiment.

The property evaluation unit 30 may include the CPU 24, the memory 25 and the input/output interface 26 of the computer. The property evaluation unit 30 is configured to evaluate a value of the property based on a current or past transaction record (also referred to as "transaction history") of a property the same as or similar to the property using the property identification information 85 stored in the property information storage unit 21.

The property evaluation unit 30 evaluates the property based on the property identification information 85 stored in the property information storage unit 21 of the property management device 10 (publication management device 11 of property or transaction support device 12 of property). The evaluation of the property can be performed using the current or past transaction record of the property the same as or similar to the property to be evaluated. The user identified by the user information may be used to evaluate the property.

In particular, when the property of the same type as the property to be evaluated has a record of being traded in the past, the property evaluation unit 30 can calculate the value of the property using the transaction record. In the value evaluation, the value of the property can be calculated based on the current or past transaction record of the property related to the property to be evaluated.

The value of the property may be calculated using the past transaction record as a value of the property, or may be calculated by multiplying a value of the past transaction record by a certain increase or decrease rate, a coefficient determined by a state of the property, or the like.

The transaction record itself in which the transaction is established or not established at present or in the past may be used as evaluation information of the property to calculate the value. Identity of the property can be determined based on whether the "property type identification number" indicating the type of the property is the same

As the current or past transaction record for evaluating the value of the property (that is, a transaction target), it is desirable to use not only the transaction record such as transfer or renting out but also information such as history information of the transaction and authenticity appraisement in the transaction record. In addition, when the value in the transaction is evaluated, an average transaction amount, the maximum amount or the minimum amount may be calculated.

Further, in a case where there is information indicating a state of the property represented by information of a use history in a use stage such as maintenance or storage of the property (particularly, also referred to as a maintenance history or a storage history) in addition to information of an initial history in an initial stage such as a manufacturing time point or a sales time point of the property (transaction target), an evaluation result may be presented in consideration of a market value based on the history information.

Accordingly, the evaluation of the value of the property in the property evaluation unit 30 may include, for example, history information of a transaction, authenticity appraisement information, a state of the property, and information indicating an administrator of the property, although not shown, in addition to the current or past transaction record as shown in Fig. 12.

In particular, since the evaluation support device 13 according to the present embodiment also evaluates the property that does not requests a transaction such as transfer or renting out, the user can easily know an appropriate value of the target property by evaluating the property in consideration of the transaction record so far. Further, the user can notify the requester of the transaction of the appropriate value of the property. As a result, even the property that does not request the transaction such as transfer or renting out at first can be set as a property serving as the transaction target by receiving an application from the requester, which leads to promotion of the transaction.

The property management device 10 (evaluation support device 13 of property) according to the present embodiment stores and manages the property identification information 85 and/or the user information in the property information storage unit 21. By recording at least the user information in the property information storage unit 21, the evaluation support device 13 can manage the property based on the user information. As a result, the value of the property managed by a specific user can be evaluated.

Accordingly, the property management device 10 (evaluation support device 13 of property) according to the present embodiment may identify the property managed by the user based on the user information stored in the property information storage unit 21 and evaluate the value of the property, thereby calculating the value of the property when the user performs a transaction such as transfer or inheritance of the property. By identifying a transaction partner such as a transferee or an inheritor of the property, the value of the property managed by the user can be evaluated and then managed.

By identifying the transaction partner such as the transferee or the inheritor of the property, it is possible to contribute to making of a will regarding a content including the property and the transaction partner of the property. Further, by transmitting information on the user, the property and the inheritor to a specific computer (such as a will making device), the will making device can make the will.

Further, the property management device 10 (evaluation support device 13 of property) according to the present embodiment may include an appraisement information acquisition unit that acquires the appraisement information from an external appraisement device connected via the network. The appraisement information may be appraisement information regarding validity and correctness of the value of the property evaluated by the property evaluation unit 30 and authenticity of the target property.

In order to acquire the appraisement information, the property management device 10 (evaluation support device 13 of property) transmits the property identification information 85 and value information of the property evaluated by the property evaluation unit 30 to the external appraisement device, and transmits the user information of the property as necessary. The information may be transmitted not only at a timing at which the property identification information 85 is recorded in the property information storage unit 21 but also at a timing at which authentication request information for requesting an authentication is acquired from the user terminal 51 and/or the requester terminal 52.

In the external appraisement device, when the information is acquired, validity or correctness of evaluation information of the property in the property evaluation unit 30 is evaluated or appraised based on the information, information stored by the external appraisement device, and information publicized on the network. The external appraisement device outputs the result (the evaluation result or the appraisement result) to the property management device 10 (evaluation support device 13 of property). In the property management device 10 (evaluation support device 13 of property), the appraisement information acquisition unit acquires the appraisement information output from the external appraisement device.

The appraisement information may be value information based on the evaluation result of the appraisement device, and may include information indicating validity and correctness of the evaluation result of the property evaluation unit 30, and information obtained by authenticating the evaluation result of the property evaluation unit 30. In addition, the appraisement information may include information indicating an authenticity appraisement result.

As the external appraisement device at this time, a different device can be used for each type of property to be evaluated. For example, when the property to be evaluated is a "real estate", an appraisement device that stores transaction information and registration information of real estate can be used. When the property to be evaluated is an "automobile", an appraisement device that stores transaction information of automobiles and information on a user such as an owner or a user of the automobile can be used.

Therefore, in the evaluation support device 13, it is preferable that the appraisement device used for appraisement is held as appraisement device identification information in association with a type of property, and the appraisement can be performed by the optimal appraisement device based on the appraisement device identification information.

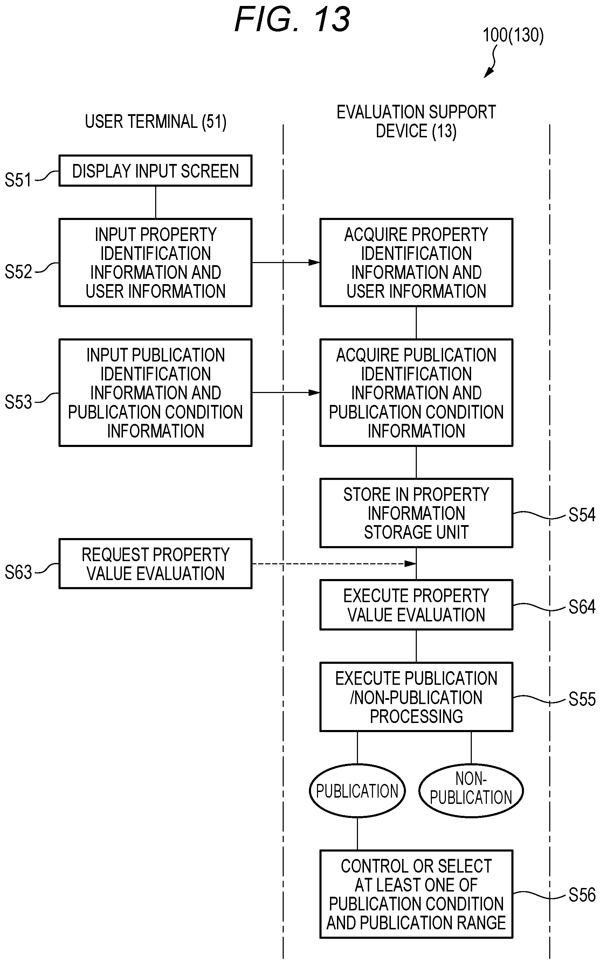

Fig. 13 is a sequence diagram of the property management system 100 (evaluation support system 130 of property) formed using the property management device 10 (evaluation support device 13 of property). In the property management system 100 (evaluation support system 130 of property) according to the present embodiment, the property management device 10 (publication management device 11 of property) in the property management system 100 (publication management system 110 of property) shown in the sequence diagram of Fig. 5 further includes the property evaluation unit 30 that evaluates the value of the property.

That is, the property management system 100 (evaluation support system 130 of property) according to the embodiment is configured to evaluate the value of the property stored in the property information storage unit 21 of the property management device 10 (publication management device 11 of property), that is, the property regardless of an intention of transaction such as transfer or renting out, or regardless of whether the property is publicized or not publicized.

Specifically, the evaluation support device 13 stores the property identification information 85 in the property information storage unit 21 by an operation performed by the user using the user terminal 51 or by collecting information on the Internet in the property management device 10 (evaluation support device 13 of property).

Subsequently, the property evaluation unit 30 of the property management device 10 (evaluation support device 13 of property) executes evaluation processing of evaluating the value of the property based on a current or past transaction record of a property the same as or similar to the property using the property identification information 85 stored in the property information storage unit 21.

The evaluation processing may be executed when the property identification information 85 is recorded in the property information storage unit 21 or may be executed at any timing after the property identification information 85 is recorded in the property information storage unit 21 (for example, when an evaluation request is received from the user terminal 51).

For example, in Fig. 13, after processing of storing the information in the property information storage unit (S54), the user terminal 51 transmits an instruction of a property evaluation request to the evaluation support device 13 (S63). The property management device (evaluation support device 13 of property) that has acquired the property evaluation request executes property value evaluation processing (S64), but the present disclosure is not limited thereto, and the property value evaluation processing may be executed at any timing. In the sequence diagram in Fig. 13, processing the same as that in the sequence diagram in Fig. 5 are denoted by the same reference numerals, and detailed description thereof will be omitted.

In particular, in the property management system 100 (evaluation support system 130 of property) according to the present embodiment, since processing is executed based on the property management system 100 (publication management system 110 of property) in the sequence diagram shown in Fig. 5, the property to be evaluated is not limited to a publicized property and includes a non-publicized property.

Therefore, in the property management system 100 (evaluation support system 130 of property), it is possible to evaluate a value of a property that is not intended for a transaction such as transfer or renting out and that is not intended to be publicized to a third party.

Therefore, an evaluation result of the value of the property managed by the user can be acquired without requiring an intention of transaction such as transfer or renting out and without requiring publication.

The user who has acquired the value information can review the transaction such as transfer or renting out of the property with reference to the value. As a result, the user can change the property that does not request the transaction such as transfer or renting out initially to a property serving as the transaction target such as transfer or renting out according to the value information. At this time, the user can record the transaction request information 81 in the transaction request information storage unit 29.

Therefore, the property management system 100 (evaluation support system 130 of property) according to the present embodiment can provide an opportunity for a transaction (including the transaction such as transfer or renting out) on the property managed by the user himself or herself. This makes it possible to change the property managed by the user himself or herself from the property in a state of being simply managed to the property serving as the transaction target (inventory) in the transaction, and promotes the opportunity for the transaction.

The property management system 100 (evaluation support system 130 of property) according to the present embodiment further includes an external appraisement device that generates appraisement information on the value of the property evaluated by the property evaluation unit 30.

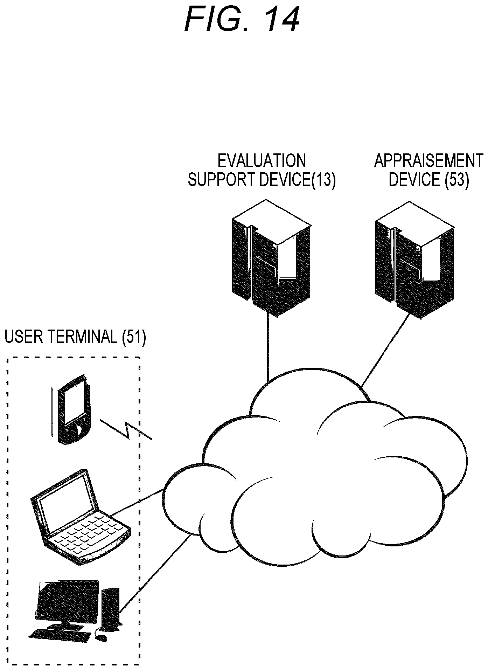

Fig. 14 is a network configuration view of the property management system 100 (evaluation support system 130 of property). As shown in Fig. 14, in the property management system 100 (evaluation support system 130 of property), the evaluation support device 13, the user terminal 51 and an appraisement device 53 are connected to each other via a network such as the Internet.

The external appraisement device 53 can output an appraisement result including validity of an evaluation result generated by the property evaluation unit 30. In the present embodiment, the evaluation result of the property evaluation unit 30 may be used to trust objective evaluation in the property management system 100 (evaluation support system 130 of property). As the appraisement device 53, a device provided by an external specialized institution can be used. In this case, the evaluation support device 13 of property requests the external specialized institution to perform appraisement and receives an appraisement result, thereby presenting a transaction condition together with the appraisement result.

The appraisement request for the appraisement device is performed after evaluation information is generated by the property evaluation unit 30, and the property management device 10 (evaluation support device 13 of property) transmits the evaluation information to the appraisement device at a predetermined timing. In addition, the property management device 10 (evaluation support device 13 of property) may transmit the evaluation information to the appraisement device when appraisement request information requesting the appraisement request is acquired from the user terminal 51. When the appraisement information is generated in the appraisement device, the property management device 10 (evaluation support device 13 of property) acquires the appraisement information in the appraisement information acquisition unit.

The property management system 100 (evaluation support system 130 of property) may be configured using the property management system 100 (transaction support system 120 of property) that executes the processing shown in Fig. 9.

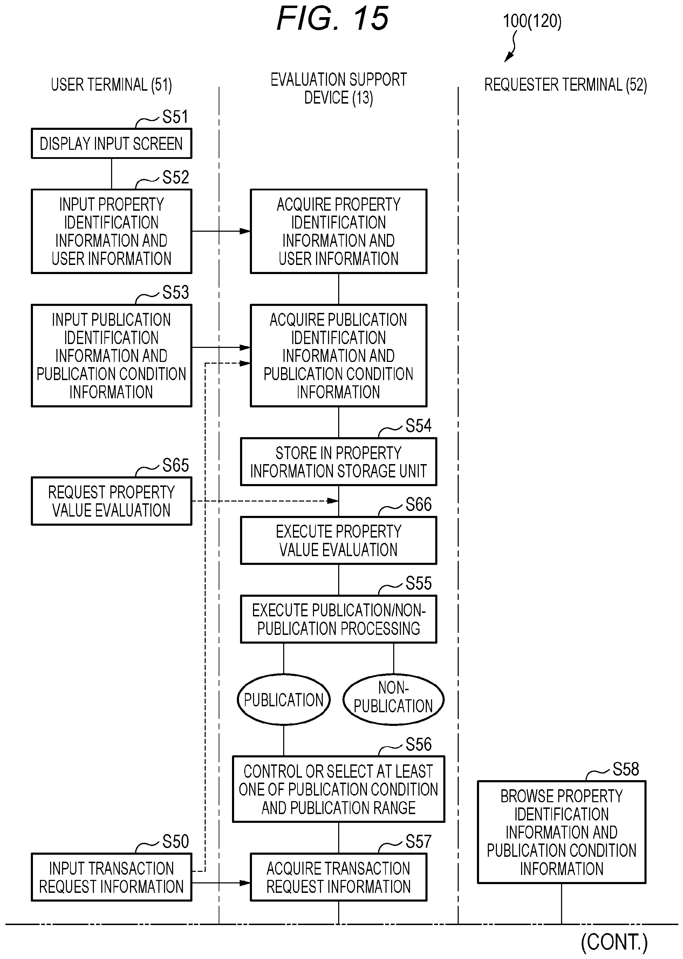

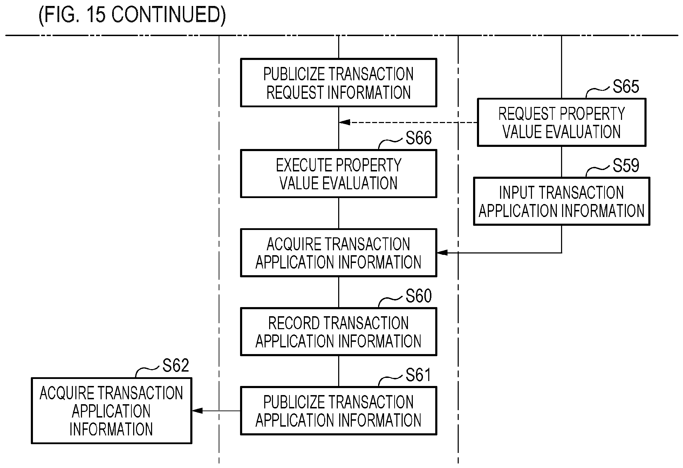

Fig. 15 shows processing executed by the property management system 100 (evaluation support system 130 of property) formed using the property management system 100 (transaction support system 120 of property). In Fig. 15, processing the same as that shown in Fig. 9 is denoted by the same reference numerals, and detailed description thereof will be omitted.

The property management device 10 (evaluation support device 13 of property) in the property management system 100 (evaluation support system 130 of property) according to the present embodiment includes the property evaluation unit 30 that evaluates the value of the property, and may be formed by connecting the requester terminal 52 to the network shown in Fig. 14.

The property management system 100 (evaluation support system 130 of property) is configured to evaluate the value of the property stored in the property information storage unit 21 of the property management device 10 (transaction support device 12 of property), that is, the property publicized by the publication management unit 22 and having an intention of transaction such as transfer or renting out.

In processing executed by the property management system 100 (evaluation support system 130 of property), the processing of registering the property managed by the user is performed first, similarly to the processing performed by the property management system 100 (transaction support system 120 of property) shown in Fig. 9. As shown in Fig. 5, the processing of registering the property is performed by transmitting the registration from the user terminal 51 or collecting information (the property identification information 85 and/or the user information) publicized on the network by the evaluation support device 13. It is desirable that the property identification information 85 and/or the user information is publicized, and it is desirable that a transaction such as transfer or renting out is performed. However, it is not necessary to identify a condition including a price and a timing of the transaction.

In the transaction support system 120, the evaluation result of the value of the property serving as the transaction target can be acquired. Specifically, first, the user operates the user terminal 51 or the property management device 10 (evaluation support device 13 of property) collects information from the Internet to store the property identification information 85 in the property information storage unit 21 (S54).

The property evaluation unit 30 of the property management device 10 (evaluation support device 13 of property) acquires transaction request information (S57), and executes evaluation processing of evaluating the value of the property based on a current or past transaction record of a property the same as or similar to the property using the property identification information 85 stored by the property information storage unit 21 (S66).

The evaluation processing (S66) may be executed when the property identification information 85 is recorded in the property information storage unit 21 or may be executed at any timing after the property identification information 85 is recorded in the property information storage unit 21.

For example, the evaluation processing (S66) may be executed according to an instruction of an evaluation request from the user terminal 51 (S65), or may be executed according to an instruction of an evaluation request for the property from the requester terminal 52 in contact with the publicized property information.

Information on an evaluation result in the property evaluation unit 30 may be stored in a storage unit of the property management device 10 (evaluation support device 13 of property) or may be transmitted to the user terminal 51 or the requester terminal 52 as necessary. Specifically, in addition to transmission to both the user terminal 51 and the requester terminal 52, transmission to the user terminal 51 or the requester terminal 52 that has given the instruction of the evaluation request can be performed. In addition, transmission to the user terminal 51 or the requester terminal 52 designated at the time of the instruction of the evaluation request may be performed.

In particular, when desiring to acquire or rent the property serving as the transaction target, the requester may perform a transaction negotiation by attaching the evaluation result in the property evaluation unit 30 at the time of the transaction negotiation.

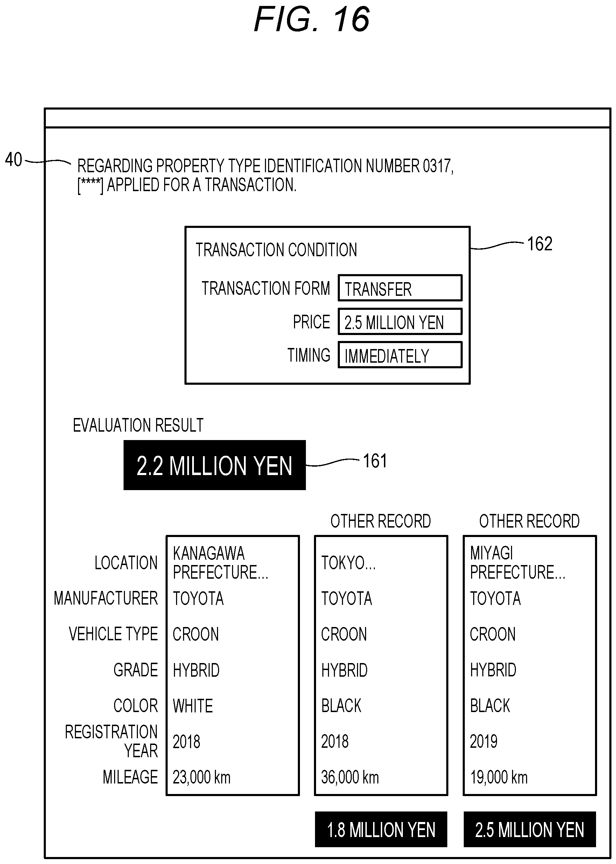

Fig. 16 is a screen on which transaction application information 162 including an evaluation result 161 in the property evaluation unit 30 and a request condition for acquisition or renting by the requester is displayed.

The requester of the transaction acquires the evaluation result of the property requested to be acquired or rented, and identifies a transaction condition such as a price or a timing to be presented to the user in consideration of the evaluation result. Then, the requester can present the transaction condition to the user as the transaction application information 162. On the other hand, the user can determine whether to perform the transaction based on the transaction condition in consideration of a market value that is an objective evaluation result.

In particular, the property management system 100 (evaluation support system 130 of property) constructed based on the property management system 100 (transaction support system 120 of property) can publicize the property managed by the user as a potential inventory (that is, a transaction target) in the transaction.

The evaluation support system 130 of property can objectively evaluate a value of the inventory (that is, the transaction target) and provide the result to the user or the requester.

Therefore, the evaluation support system 130 of property can provide the user who manages the inventory (that is, the transaction target) with a transaction condition in consideration of a market value that is an objective evaluation result.

Since the market value that is the objective evaluation result is provided to the user, the user can be relieved, a possibility of responding to the transaction increases, and as a result, the number of opportunities for the transaction of the product increases.

### «Inheritance support device and inheritance support system of property»

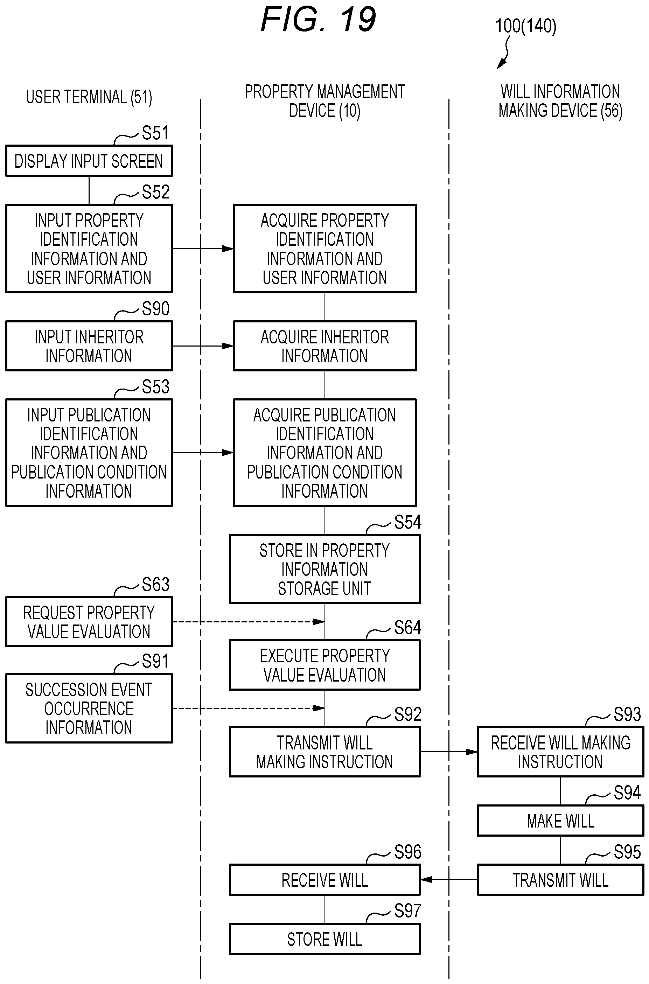

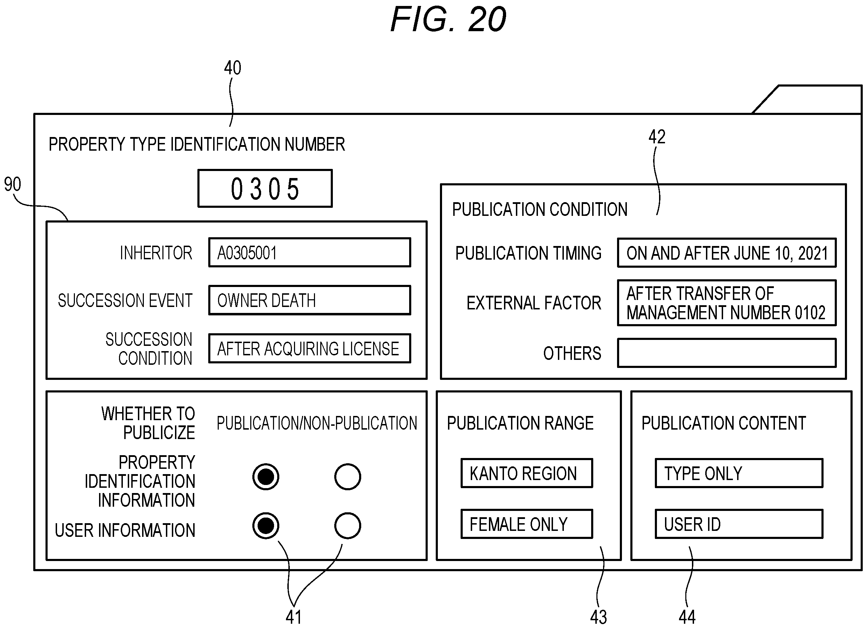

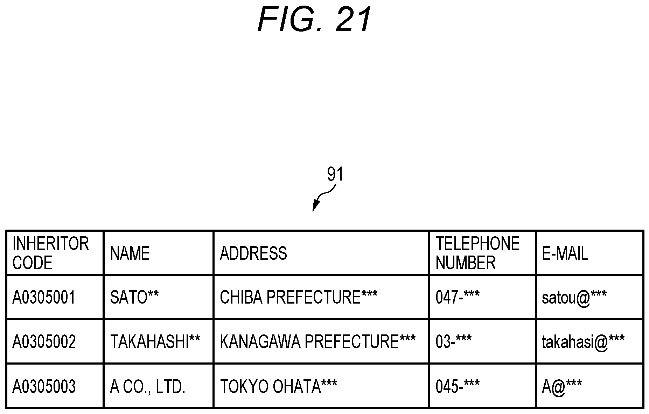

Fig. 19 shows a sequence diagram of the property management system 100 (inheritance support system 140) configured using the property management device 10 (inheritance support device) according to another embodiment, Fig. 20 is a file (or database) configuration diagram showing items of succession information in the present embodiment, and Fig. 21 is a configuration diagram showing items of a successor file (or database) 91. In particular, in the present embodiment, an example is shown in which the successor is a general successor (successor), but the successor may also be a specific successor. In addition, the property management system 100 (inheritance support system 140) is configured to collaborate with the will information making device 56 so as to make a will when an event of succession arises for a property that is a succession target.

As shown in this figure, an input screen is displayed on the user terminal 51 (S51), property identification information and user information are input for a property that is a succession target by operating the user terminal 51 (S52), and the property management device acquires the input information. In the present embodiment, for the property that is a succession target, inheritor information for identifying an inheritor as the successor is input from the user terminal 51 (S90), so that the property management device 10 can acquire the inheritor identification information. Since the property management device 10 (succession support device) acquires and stores the inheritor identification information (S54), it can perform succession including inheritance and other general successions for the property being managed. The inheritor identification information in the present embodiment is one of the inheritor information for identifying a successor, and may be stored in the property information storage unit or the like as one of the succession information. Such succession information (in particular, inheritor identification information) may be for natural persons or corporations, and may be identified for each management property or may be set for respective some of managed properties. As shown in Fig. 21, the successor file (or database) for storing such inheritor identification information may be composed of items that identify inheritors, such as an inheritance code, a name, an address, a telephone number, and an e-mail.

In the property management device 10 (inheritance support device), the property information storage unit may further include user information for identifying an owner, a manager, or a user of the property that is a management target, and may further accept inputs of the publication identification information for identifying publication or non-publication of each of the property identification information and the user information(S53), and acquire and store the same (S54). In addition, the property management device may include a publication processing unit configured to perform publication processing of the property identification information and/or user information based on the publication condition information included in the publication identification information, wherein the publication identification information includes publication condition information including a publication content and a publication condition for the publication, for each of the property identification information and/or user information to be publicized.

In particular, in the present embodiment, the property identification information, user information, publication identification information, publication condition information, and succession information are stored in the property information storage unit of the property management device 10, so that the property can be managed. Although not shown in Fig. 20, publication/non-publication processing may be performed for the registered property by processing similar to that shown in Fig. 9.

In the present embodiment, the property value evaluation request shown in Fig. 13 may be made for the property stored by the property management device 10, and based on this, the property management device may perform value evaluation processing for each property. Specifically, property value evaluation request information is transmitted (S63), and the property management device 10 (inheritance support device) acquiring this information performs property value evaluation (S64). The property value evaluation processing may be performed not only by the property management device, but also by acquiring an evaluation result from an external value evaluation device connected via a network. However, the property value evaluation processing for the management property may be performed arbitrarily, and the property value evaluation processing may not be performed.

In addition, the succession information may include succession event information for identifying an event that is a cause of succession. In particular, in the present embodiment, as shown in Fig. 21, the succession event information is identified as an inheritance event for identifying an event that is a cause of succession, such as inheritance. When an event of succession occurs, succession event occurrence information is transmitted from the user terminal 51 (S91), and upon receiving the succession event occurrence information, the property management device 10 (inheritance support device) transmits will making instruction information to the will making device that makes a will, together with property identification information on a property that is a management target, succession information, and, if necessary, user information (S92). Whether the succession event has occurred may be determined based on the information (succession event occurrence information) for identifying occurrence of succession event transmitted from the successor stored in the succession information or the user stored in the user information. In addition, the succession event may be acquired by information obtained through searches on the Internet, or a link with resident register information managed by local governments, or a link with corporate register information managed by the Legal Affairs Bureau. In particular, in the link with the resident register information, information on the acceptance of a death report may be used as a cause of succession, and in the link with the corporate register information, information on closure of the corporate register may be used as a cause of succession.

In the property management device 10 (inheritance support device) according to the present embodiment, upon receiving the will making instruction information based on reception of the succession event occurrence information (S93), the will information (will) according to the succession information is made (S94), and if necessary, authentication is added to the will information, and then the will information may be transmitted to the property management device 10 (inheritance support device) (S95). In particular, the will information making device is preferably configured to make will information that includes requirements necessary for making a valid will, such as identification of a property that is a will target, identification of an inheritor, and date of the will. When the property management device (inheritance support device) receives the will information (will) (S96), the property management device stores the same (S97). Thereby, the objectivity of the will information (will) can be ensured.

Additionally, as shown in Fig. 21, the succession information may include, in addition to the cause of succession, conditions for performing succession, as succession condition information. Such succession condition information may be information that prescribes conditions for additional succession after the cause occurs, separately from the cause of succession such as general succession or specific succession.

This application is based on Japanese Patent Application No. 2022-000872, filed on January 26, 2022, the contents of which are incorporated herein by reference.

### REFERENCE SIGNS LIST

- 10: property management device
- 11: publication management device
- 12: transaction support device
- 13: evaluation support device
- 20: transaction application information storage unit
- 21: property information storage unit
- 22: publication management unit
- 27: related property transaction information providing unit
- 28: transaction history publication unit
- 29: transaction request information storage unit
- 30: property evaluation unit
- 32: user contact information
- 42: publication condition information
- 43: publication range information
- 51: user terminal
- 52: requester terminal
- 53: appraisement device
- 81: transaction request information
- 82: transaction condition information
- 83: rank information
- 84: transaction element information
- 85: property identification information
- 100: property management system
- 101: transaction request condition information
- 110: publication management system
- 120: transaction support system
- 130: evaluation support system

## Claims

1. A succession support device configured using a computer and configured to manage at least one of a tangible property and an intangible property for support of succession thereof, the succession support device comprises:
a property information storage unit configured to store property identification information for identifying a property that is a management target, succession information comprising successor information for identifying a successor predetermined for the property, and publication identification information for identifying publication or non-publication of at least the property identification information; and
a publication management unit configured to manage publication of at least one of the property identification information and the user information based on the publication identification information stored by the property information storage unit.

2. The succession support device according to claim 1, wherein the succession information further comprises succession event information for identifying an event that is a cause of succession, and
wherein the succession support device comprises a succession information transmission unit configured to transmit the property identification information and the successor information to a will making device configured to make will information, under a condition that the event that is a cause of succession is satisfied.

3. The succession support device according to claim 1 or 2, further comprising a property value evaluation unit configured to determine a value of the property that is the management target.

4. An evaluation support device configured using a computer and configured to support evaluation of at least one of a tangible property and an intangible property managed by a user, the evaluation support device comprises:
a property information storage unit configured to store property identification information for identifying a property managed by a user, user information for identifying the user who manages the property, and publication identification information for identifying publication or non-publication of each of the property identification information and the user information;
a publication management unit configured to manage publication of at least one of the property identification information and the user information based on the publication identification information;
a publication processing unit configured to, when the publication management unit manages publication of at least one of the property identification information and the user information based on the publication identification information, perform publication processing based on publication condition information included in the publication identification information;
a history storing unit configured to, in any case of a case where neither the property identification information nor the user information has been publicized and a case where at least one of the property identification information and the user information has been publicized based on the publication condition information by the publication processing unit, store a history of a transaction when the transaction is established;
a property evaluation unit configured to evaluate a value of the property based on the user information stored in the property information storage unit; and
a transmission unit configured to transmit, to a specific computer configured to make a will, the user information, the property identification information regarding a property evaluated by the property evaluation unit and information about a transaction partner by identifying the transaction partner that performs a transaction of transfer or inheritance for a property managed by a user based on the user information stored in the property information storage unit,
wherein the public identification information is configured to enable selection of not publicizing any one of the property identification information and the user information and publicizing at least one of the property identification information and the user information, and includes, for each property, publication condition information including a publication content, which designates, when selecting to publicize at least one of the property identification information and the user information, at least one of the property identification information and the user information, and a publication condition for the publication.

5. A succession support program configured to run by a computer and to manage at least one of a tangible property and an intangible property for support of succession thereof, the succession support program comprising:
a property information storing step of acquiring and storing property identification information for identifying a property that is a management target, successor information for identifying a successor predetermined for the property, and succession event information for identifying an event that is a cause of succession;
a property value evaluation step of determining a value of the property that is a management target; and
a succession information transmission step of transmitting the property identification information and the successor information to a will making device configured to make will information, under a condition that the event that is a cause of succession is satisfied.
